# EUROPEAN PATENT APPLICATION

(11) **EP 3 879 670 A1**
(43) Date of publication of application: **15.09.2021**
(21) Application number: 19881461.8
(22) Date of filing: 05.11.2019
(51) Int. Cl.: H02J 50/12

(54) **WIRELESS CHARGING STATION, AUTOMATIC MOVING DEVICE, AND WIRELESS CHARGING SYSTEM**

(30) Priority: 05.11.2018 CN 201811307116
(71) Applicant: Positec Power Tools (Suzhou) Co., Ltd, Suzhou, Jiangsu 215123 (CN)
(72) Inventor: HE, Mingming, Suzhou, Jiangsu 215123 (CN); YANG, Xiaofei, Suzhou, Jiangsu 215123 (CN); ZHANG, Chen, Suzhou, Jiangsu 215123 (CN); TAN, Yiyun, Suzhou, Jiangsu 215123 (CN); CHEN, Xiaoyong, Suzhou, Jiangsu 215123 (CN)
(74) Representative: Dentons UK and Middle East LLP
(86) International application number: PCT/CN2019/115729
(87) International publication number: WO 2020/094014

(57) **Abstract**

The present invention provides a wireless charging station, configured to charge a self-moving device. The wireless charging station includes a bottom plate and a wireless transmitting module fixed to the bottom plate, the wireless transmitting module is provided with at least one resonant coil transmitting component, the resonant coil transmitting component transmits an electromagnetic signal, and the self-moving device receives the electromagnetic signal after entering the bottom plate to perform a charging operation. The bottom plate of the wireless charging station in the present embodiments is laid flat on a ground, a case that the elderly and children in a lawn are easily tripped up by a convex-type charging station is avoided, and a structure of the wireless charging station can be simpler, thereby improving the aesthetics of the wireless charging station and the lawn. In addition, the wireless charging station and the self-moving device adopt a resonant charging principle, and no strict alignment is required between the wireless transmitting module and the wireless receiving module, thereby reducing the difficulty of docking the self-moving device and improving the docking efficiency.

## Description

### BACKGROUND

### Technical Field

The present invention relates to the field of charging technologies, and in particular, to a wireless charging station, a self-moving device, and a wireless charging system.

### Related Art

With the development of science and technology, self-moving devices in various fields become well known to people. Self-moving devices can automatically perform preset related tasks through preset programs without human operation and intervention, and therefore industrial applications and household product applications are very wide. The household product applications are, for example, gardening robots, cleaning robots, and snow removal robots, and the robots greatly save people's time and bring great convenience to both industrial production and home life. However, current self-moving devices such as intelligent lawn mowers generally adopt a wired charging manner, which requires the establishment of wired charging stations on the lawn. The wired charging station has a plurality of disadvantages. For example, first, the wired charging station is usually raised relative to the ground, and a pole piece is sharp, which is easy to trip up the elderly and children and cause accidental injuries. Secondly, the raised charging station disposed on the ground makes a working region unsightly. In addition, the pole piece of the wired charging station is exposed, and is easily corroded and oxidized, resulting in poor contact, and problems such as electric leakage are prone to occur in the exposed pole piece.

### SUMMARY

The technical problems are to be solved by the present invention by providing a wireless charging station, a self-moving device, and a wireless charging system with high docking accuracy, high charging efficiency, and aesthetics.

To solve the above technical problems, a technical solution of the present invention is a wireless charging station, configured to charge a self-moving device. The wireless charging station includes a bottom plate and a wireless transmitting module fixed to the bottom plate, the wireless transmitting module is provided with at least one resonant coil transmitting component, the resonant coil transmitting component transmits an electromagnetic signal, and the self-moving device receives the electromagnetic signal after entering the bottom plate to perform a charging operation.

In a specific embodiment, the bottom plate includes a plurality of hollow holes, to allow vegetation to pass through the hollow holes for growing.

In a specific embodiment, the hollow holes are circular or rectangular.

In a specific embodiment, the hollow holes are evenly arranged on the bottom plate.

In a specific embodiment, a docking guidance structure is disposed on the bottom plate, and the self-moving device is guided by using the docking guidance structure to dock at a predetermined charging position.

In a specific embodiment, the docking guidance structure includes a guide rail structure.

In a specific embodiment, the docking guidance structure includes a sensing structure, where the sensing structure and the self-moving device sense each other.

In a specific embodiment, the sensing structure includes a magnetic component or a guide wire structure.

In a specific embodiment, an inclined structure rising from a bottom surface is disposed on a front side of the bottom plate, and the self-moving device returns to the bottom plate along the inclined structure.

In a specific embodiment, a length of the bottom plate is 1.4 times to 2 times a length of the self-moving device, and a width of the bottom plate exceeds a width of the self-moving device by 10% to 30%.

In a specific embodiment, a height of the bottom plate is between 15 mm and 25 mm.

In a specific embodiment, an upper surface of the wireless transmitting module does not extend beyond an upper surface of the bottom plate.

In a specific embodiment, an operation module is disposed on the bottom plate, and work of the wireless transmitting module is started by triggering the operation module.

In a specific embodiment, an indicator light is disposed on the bottom plate, and a working state of the bottom plate is indicated by using the indicator light.

In a specific embodiment, a sunshine shed structure is disposed on one side of the bottom plate, and the sunshine shed structure includes a support and a shed body connected to the support.

In a specific embodiment, the sunshine shed structure is disposed on a rear side of the bottom plate.

In a specific embodiment, a projection of the shed body structure on a horizontal plane covers a projection of the self-moving device on the horizontal plane when docking at the wireless charging station.

In a specific embodiment, the wireless transmitting module is disposed on the rear side of the bottom plate, and when a wireless receiving module of the self-moving device is also disposed on a rear side of the self-moving device, a tail portion of the self-moving device first enters the bottom plate.

In a specific embodiment, the wireless transmitting module is disposed in the middle or the rear of the bottom plate in a length direction.

In a specific embodiment, distances from the wireless transmitting module to two sides of the bottom plate in a width direction are the same.

In a specific embodiment, at least one holding portion is disposed on the bottom plate or the wireless transmitting module.

In a specific embodiment, the holding portions are disposed on two sides of the bottom plate or the wireless transmitting module.

In a specific embodiment, the self-moving device includes a wireless charging receiving module, and the wireless charging receiving module includes only one resonant coil receiving component.

In a specific embodiment, the wireless charging station includes a temperature detection device, where a current temperature of the wireless charging station and/or the self-moving device is detected by using the temperature detection device, and if at least one of the current temperatures exceeds a temperature threshold, the wireless charging station and/or the self-moving device is controlled to perform over-temperature protection.

In a specific embodiment, during charging of the self-moving device, if the at least one of the current temperatures exceeds the temperature threshold, the performing control to perform over-temperature protection includes: controlling both a wireless charging transmitting module in the wireless charging station and a wireless charging receiving module in the self-moving device to be turned off.

In a specific embodiment, when charging of the self-moving device is completed, and if the at least one of the current temperatures exceeds the temperature threshold, the performing control to perform over-temperature protection includes: controlling the self-moving device to dock at the wireless charging station.

In a specific embodiment, after the performing control to perform over-temperature protection, and when the temperature detection device detects that the current temperature of the wireless charging station and/or the self-moving device is lower than the temperature threshold, the self-moving device is controlled to depart from the wireless charging station.

In a specific embodiment, the temperature threshold is between 45°C and 50°C.

In a specific embodiment, if the self-moving device is incapable of successfully docking with the wireless charging station when returning to the wireless charging station, the self-moving device controls the wireless transmitting module to stand by and/or controls the self-moving device to stop.

In a specific embodiment, the controlling the wireless transmitting module to stand by includes controlling the wireless transmitting module to stop transmitting an electromagnetic wave outward.

In a specific embodiment, the self-moving device and the wireless charging station each include a wireless communication module, and after the self-moving device establishes communication with the wireless charging station, the wireless charging station receives a standby signal transmitted by the self-moving device to control the wireless transmitting module to stand by.

In a specific embodiment, the wireless communication module includes a radio frequency module or a coil component.

The present invention further provides a self-moving device, charged by a wireless charging station, the self-moving device including: a housing; a movable device, mounted on the housing and configured to drive the self-moving device to move; a working device, mounted on the housing and configured to perform a working task; and a power supply device, mounted in the housing and configured to supply power to the movable device and the working device, where the wireless charging station includes a bottom plate and a wireless transmitting module fixed to the bottom plate, the wireless transmitting module is provided with at least one resonant coil transmitting component, the self-moving device includes a wireless receiving module, the wireless receiving module includes at least one resonant coil receiving component, and after entering the bottom plate, the self-moving device receives, by using the resonant coil receiving component, an electromagnetic signal transmitted by the resonant coil transmitting component to supply power to the power supply device.

In a specific embodiment, the resonant coil receiving component is disposed at the bottom of the self-moving device.

In a specific embodiment, the resonant coil receiving component is disposed in a rotation center of the self-moving device.

In a specific embodiment, a front portion or a rear portion of the self-moving device first enters the bottom plate.

In a specific embodiment, the self-moving device includes a docking guidance detection structure, where the docking guidance detection structure detects a docking guidance structure disposed on the wireless charging station to guide the self-moving device to dock at a predetermined charging position.

In a specific embodiment, the self-moving device includes a temperature detection device, where a current temperature of the wireless charging station and/or the self-moving device is detected by using the temperature detection device, and if at least one of the current temperatures exceeds a temperature threshold, the self-moving device and/or the wireless charging station is controlled to perform over-temperature protection.

In a specific embodiment, during charging of the self-moving device, if the at least one of the current temperatures exceeds the temperature threshold, the performing control to perform over-temperature protection includes: controlling both a wireless charging transmitting module in the wireless charging station and a wireless charging receiving module in the self-moving device to be turned off.

In a specific embodiment, when charging of the self-moving device is completed, and if the at least one of the current temperatures exceeds the temperature threshold, the performing control to perform over-temperature protection includes: controlling the self-moving device to dock at the wireless charging station.

In a specific embodiment, after the performing control to perform over-temperature protection, and when the temperature detection device detects that the current temperature of the wireless charging station and/or the self-moving device is lower than the temperature threshold, the self-moving device is controlled to depart from the wireless charging station.

In a specific embodiment, the temperature threshold is between 45°C and 50°C.

In a specific embodiment, if the self-moving device is incapable of successfully docking with the wireless charging station when returning to the wireless charging station, the self-moving device controls the wireless transmitting module to stand by, and then controls the self-moving device to stop.

In a specific embodiment, the controlling the wireless transmitting module to stand by includes controlling the wireless transmitting module to stop transmitting an electromagnetic wave outward.

In a specific embodiment, the self-moving device and the wireless charging station each include a wireless communication module, and after the self-moving device establishes communication with the wireless charging station, the self-moving device transmits a standby signal to the wireless charging station to control the wireless transmitting module to stand by.

In a specific embodiment, the wireless communication module includes a radio frequency module or a coil component.

The present invention further provides a wireless charging system, including: the wireless charging station and the self-moving device that are mentioned above.

The present invention has the following beneficial effects: the bottom plate of the wireless charging station in the present invention is laid flat on a ground, a case that the elderly and children in a lawn are easily tripped up by a convex-type charging station is avoided, and a structure of the wireless charging station can be simpler, thereby improving the aesthetics of the wireless charging station and the lawn. In addition, the wireless charging station and the self-moving device adopt a resonant charging principle, and no strict alignment is required between the wireless transmitting module and the wireless receiving module, thereby reducing the difficulty of docking the self-moving device and improving the docking efficiency.

The present invention aims to resolve one of the technical problems in the related art at least to a certain extent. In view of this, the present invention further provides a method for charging a self-moving device, where resonant charging is performed on the self-moving device through cooperation between a bottom plate provided with hollow holes of a wireless charging station and only one resonant coil component, thereby saving energy in a case of ensuring a charging effect.

The present invention provides another method for charging a self-moving device.

The present invention provides still another method for charging a self-moving device.

The present invention provides a charging protection method for a self-moving device.

The present invention provides another charging protection method for a self-moving device.

The present invention provides a charging energy-saving method.

The present invention provides a wireless charging station.

The present invention provides a wireless charging system.

The present invention provides another wireless charging station.

The present invention provides another wireless charging system.

The present invention provides still another wireless charging station.

The present invention provides yet another wireless charging station.

The present invention provides yet another wireless charging station.

To achieve the foregoing objective, an embodiment of a first aspect of the present invention provides a method for charging a self-moving device, applicable to a wireless charging system. The wireless charging system includes a wireless charging station and a self-moving device; the wireless charging station includes a bottom plate provided with hollow holes, only one resonant coil component is disposed on the bottom plate, and a wireless charging receiving module is disposed at the bottom of the self-moving device; and the method includes the following steps: controlling, when the self-moving device needs to be charged, the self-moving device to move to the wireless charging station; and controlling the wireless charging station to radiate an electromagnetic signal outward by using the resonant coil component, to cause the wireless charging receiving module to receive the electromagnetic signal for performing resonant charging on the self-moving device.

According to the method for charging a self-moving device provided in this embodiment of the present invention, when a self-moving device needs to be charged, the self-moving device is controlled to move to a wireless charging station, and then the wireless charging station is controlled to radiate an electromagnetic signal outward by using a resonant coil component, to cause a wireless charging module to receive the electromagnetic signal for performing resonant charging on the self-moving device. Therefore, according to the charging method provided in this embodiment of the present invention, the wireless charging station is controlled to perform resonant charging on the self-moving device. In terms of structure, through cooperation between a hollow bottom plate and only one resonant coil component, a structure of the wireless charging station can be simplified, to cause the structure of the wireless charging station to be simpler, thereby improving the aesthetics of the wireless charging station. In terms of performance, in the case of ensuring a charging effect, energy is saved in a manner in which only one resonant coil component is disposed on the wireless charging station.

According to an embodiment of the present invention, the hollow holes are rectangular.

According to an embodiment of the present invention, the bottom plate is provided with a coil component mounting groove, and the resonant coil component is mounted in the coil component mounting groove.

According to an embodiment of the present invention, an upper surface of the resonant coil component does not extend beyond an upper surface of the bottom plate.

According to an embodiment of the present invention, distances from the coil component mounting groove to two sides of the bottom plate in a width direction are the same.

According to an embodiment of the present invention, a distance between the coil component mounting groove and a front edge of the bottom plate is less than a distance between the coil component mounting groove and a rear edge of the bottom plate.

According to an embodiment of the present invention, the hollow holes are arranged on the bottom plate in rows and in columns, and avoid the coil component mounting groove.

According to an embodiment of the present invention, the wireless charging receiving module includes a resonant coil component.

According to an embodiment of the present invention, the controlling the resonant coil component in the wireless charging station to radiate an electromagnetic signal outward includes: controlling the resonant coil component in the charging station to radiate the electromagnetic signal outward at a set resonance frequency, where the resonance frequency is 6.78 MHz or 80 KHz to 400 KHz.

According to an embodiment of the present invention, the controlling the charging station to perform resonant charging on the self-moving device includes: controlling, when the resonance frequency is 80 KHz to 400 KHz, the wireless charging station to perform metal object detection, and sending warning information when a metal object is detected.

According to an embodiment of the present invention, the self-moving device is controlled to find a boundary line and return to a coverage region of the wireless charging station along the boundary line, and the self-moving device is controlled to continue to move in the coverage region, to cause the resonant coil component on the wireless charging station to be aligned with a wireless charging receiving module on the self-moving device.

According to an embodiment of the present invention, the controlling the self-moving device to move to the wireless charging station includes: controlling the self-moving device to detect a return signal generated by the boundary line, guiding, according to the detected return signal, the self-moving device to return to the coverage region of the wireless charging station, and controlling the self-moving device to continue to move in the coverage region, to cause the resonant coil component on the wireless charging station to be aligned with the wireless charging receiving module on the self-moving device.

According to an embodiment of the present invention, the method for charging a self-moving device further includes: in a process of charging the self-moving device, detecting a current temperature of the wireless charging station and/or the self-moving device, and controlling, if the current temperature exceeds a preset threshold, the wireless charging station to stop charging the self-moving device continuously.

According to an embodiment of the present invention, the method for charging a self-moving device further includes: in a process of charging the self-moving device, detecting whether a living body enters a coverage of the wireless charging station; and controlling, if it is detected that a living body enters the coverage, the wireless charging station to stop charging the self-moving device continuously.

According to an embodiment of the present invention, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

According to an embodiment of the present invention, before the controlling the wireless charging station to radiate an electromagnetic signal outward by using the resonant coil component, the method further includes: detecting whether the self-moving device enters a coverage corresponding to a predetermined charging position; and controlling, if it is detected that the self-moving device enters the coverage corresponding to the predetermined charging position, the wireless charging station to enter a charging mode.

According to an embodiment of the present invention, the detecting whether the self-moving device enters a coverage corresponding to a predetermined charging position includes: controlling the wireless charging station and the self-moving device to establish a wireless connection; and determining, if the wireless connection is successfully established between the wireless charging station and the self-moving device, that the self-moving device enters the coverage corresponding to the predetermined charging position.

According to an embodiment of the present invention, before the determining whether the self-moving device enters the coverage corresponding to the predetermined charging position, the method further includes: controlling the wireless charging station and the self-moving device to establish a wireless connection; and controlling, if the wireless connection is successfully established between the wireless charging station and the self-moving device, the wireless charging station to detect a signal strength of the wireless connection, and determining, if the signal strength of the wireless connection reaches a preset signal strength, that the self-moving device enters the coverage corresponding to the predetermined charging position.

According to an embodiment of the present invention, the method for charging a self-moving device includes: after the wireless connection is successfully established or the signal strength of the wireless connection reaches a predetermined strength, controlling the self-moving device to decelerate; and/or controlling the wireless charging station to start the resonant coil component of the wireless charging station.

According to an embodiment of the present invention, after the resonant coil component is started, the method further includes: controlling the resonant coil component to send a low-frequency handshake signal outward; controlling the wireless charging station to detect a response signal matching the low-frequency handshake signal; and determining, after the response signal is detected, that the self-moving device enters the coverage corresponding to the predetermined charging position.

According to an embodiment of the present invention, the detecting whether the self-moving device enters a coverage corresponding to a predetermined charging position includes: controlling the wireless charging station to send the low-frequency handshake signal outward by using the resonant coil component; controlling the wireless charging station to detect the response signal matching the low-frequency handshake signal; and determining, after the response signal is detected, that the self-moving device enters the coverage corresponding to the predetermined charging position.

According to an embodiment of the present invention, after the controlling the wireless charging station to enter a charging mode, the method further includes: controlling the wireless charging station to receive a request signal sent by the self-moving device, and controlling the wireless charging station to charge the self-moving device; or controlling the wireless charging station to send a request signal to the self-moving device, and controlling, after an answer signal matching the request signal is received, the wireless charging station to charge the self-moving device.

According to an embodiment of the present invention, the method for charging a self-moving device further includes: during charging, detecting whether charging of the self-moving device is completed, and if the charging has been completed, controlling the wireless charging station to enter, from the charging mode, a low-power consumption mode.

To achieve the foregoing objective, an embodiment of a second aspect of the present invention provides another method for charging a self-moving device, applicable to a wireless charging system. The wireless charging system includes a wireless charging station and a self-moving device; a resonant coil component and an in-place signal sensing member are disposed in a bottom plate of the wireless charging station, and a wireless charging receiving module is disposed at the bottom of the self-moving device; and the method includes the following steps: controlling, when the self-moving device needs to be charged, the self-moving device to move to a coverage corresponding to a predetermined charging position; controlling the self-moving device to continue to move in the coverage region, and guiding, by using the in-place signal sensing member, the self-moving device to reach the predetermined charging position; and controlling the wireless charging station to radiate an electromagnetic signal outward by using the resonant coil component, to cause the wireless charging receiving module to receive the electromagnetic signal for performing resonant charging on the self-moving device.

According to the method for charging a self-moving device provided in this embodiment of the present invention, when a self-moving device needs to be charged, the self-moving device is controlled to move to a coverage of a wireless charging station, the self-moving device is controlled to continue to move in a coverage region, the self-moving device is guided by using an in-place signal sensing member to reach a charging position, and the wireless charging station is controlled to radiate an electromagnetic signal outward by using a resonant coil component, to cause a wireless charging receiving module to receive the electromagnetic signal for performing resonant charging on the self-moving device. Therefore, according to the charging method provided in this embodiment of the present invention, the self-moving device is guided by using an in-place signal to reach the predetermined charging position, which effectively improves the efficiency of performing resonant charging on the self-moving device by the wireless charging station.

According to an embodiment of the present invention, the in-place signal sensing member is a magnetic member, and the self-moving device is provided with an inductor that magnetically induces the magnetic member.

According to an embodiment of the present invention, a distance between the resonant coil component and the magnetic member is D, a distance between the wireless charging receiving module and the inductor is d, and D is between 0.95 times d and 1.05 times d.

According to an embodiment of the present invention, the magnetic member is a magnetic strip, a magnetic strip mounting groove is provided on the bottom plate, and the magnetic strip is mounted in the magnetic strip mounting groove.

According to an embodiment of the present invention, an upper surface of the magnetic strip does not extend beyond an upper surface of the bottom plate.

According to an embodiment of the present invention, the magnetic strip mounting groove extends in a width direction of the bottom plate and extends to two sides of the bottom plate in the width direction.

According to an embodiment of the present invention, an extending length of the magnetic strip is the same as that of the magnetic strip mounting groove.

According to an embodiment of the present invention, the in-place signal sensing member is a protrusion or a groove constructed on the upper surface of the bottom plate, to form a fluctuating section on the bottom plate, and the self-moving device determines, by detecting a current change of the self-moving device when passing through the fluctuating section, that the self-moving device reaches the charging position.

According to an embodiment of the present invention, the in-place signal sensing member extends in the width direction of the bottom plate, and there are a plurality of in-place signal sensing members and the in-place signal sensing members are disposed at intervals in the width direction of the bottom plate.

According to an embodiment of the present invention, the in-place signal sensing member is in at least one of a rectangle, a trapezoid, an inverted trapezoid, a U shape, and an inverted U shape.

According to an embodiment of the present invention, the in-place signal sensing member is located on a rear side of the resonant coil component.

According to an embodiment of the present invention, a guide rail is disposed on the bottom plate.

According to an embodiment of the present invention, the in-place signal sensing member is the protrusion, and a height of the in-place signal sensing member is greater than 1/10 of a radius of a wheel and less than 1/2 of the radius of the wheel.

According to an embodiment of the present invention, the in-place signal sensing member is the groove, and a height of the in-place signal sensing member is greater than 1/10 of the radius of the wheel and less than a thickness of the bottom plate.

According to an embodiment of the present invention, the guiding, by using the in-place signal sensing member, the self-moving device to reach a charging position includes: controlling the self-moving device to sense the in-place signal sensing member, and determining, according to a sensed signal, whether the self-moving device reaches the predetermined charging position; and continuously controlling, if a determination result is that the self-moving device has not reached the predetermined charging position, the self-moving device to move until the sensed signal indicates that the self-moving device reaches the predetermined charging position.

According to an embodiment of the present invention, the method for charging a self-moving device further includes: in a process of charging the self-moving device, detecting a current temperature of the wireless charging station and/or the self-moving device, and controlling, if the current temperature exceeds a preset threshold, the wireless charging station to stop charging the self-moving device continuously.

According to an embodiment of the present invention, the method for charging a self-moving device further includes: in a process of charging the self-moving device, detecting whether a living body enters a coverage of the wireless charging station; and controlling, if it is detected that a living body enters the coverage, the wireless charging station to stop charging the self-moving device continuously.

According to an embodiment of the present invention, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

According to an embodiment of the present invention, before the controlling the wireless charging station to radiate an electromagnetic signal outward by using the resonant coil component, the method further includes: detecting whether the self-moving device enters a coverage corresponding to a predetermined charging position; and controlling, if it is detected that the self-moving device enters the coverage corresponding to the predetermined charging position, the wireless charging station to enter a charging mode.

According to an embodiment of the present invention, the method for charging a self-moving device further includes: during charging, detecting whether charging of the self-moving device is completed, and if the charging has been completed, controlling the wireless charging station to enter, from the charging mode, a low-power consumption mode.

To achieve the foregoing objective, an embodiment of a third aspect of the present invention provides still another method for charging a self-moving device, applicable to a wireless charging system. The wireless charging system includes a wireless charging station and a self-moving device; a resonant coil component is disposed on a bottom plate of the wireless charging station, and a wireless charging receiving module is disposed at the bottom of the self-moving device; and the method includes the following steps: controlling, when the self-moving device needs to be charged, the self-moving device to move to the wireless charging station; and controlling the wireless charging station to radiate an electromagnetic signal outward by using the resonant coil component, to cause the wireless charging receiving module to receive the electromagnetic signal for performing resonant charging on the self-moving device, where a resonance frequency is 6.78 MHz or 80 KHz to 400 KHz.

According to the method for charging a self-moving device provided in this embodiment of the present invention, when a self-moving device needs to be charged, the self-moving device is controlled to move to a wireless charging station, and the wireless charging station is controlled to radiate an electromagnetic signal outward by using a resonant coil component, to cause a wireless charging receiving module to receive the electromagnetic signal for performing resonant charging on the self-moving device, where a resonance frequency is 6.78 MHz or 80 KHz to 400 KHz. Therefore, according to the charging method provided in this embodiment of the present invention, the self-moving device can be charged at different resonance frequencies, to provide a plurality of charging manners for a use to select.

According to an embodiment of the present invention, the method for charging a self-moving device further includes: when the resonance frequency used by the wireless charging station is 80 KHz to 400 KHz, before charging, controlling the wireless charging station to perform metal object detection on a coverage of the wireless charging station; and when it is detected that there is a metal object in the coverage, controlling the wireless charging station to send warning information.

According to an embodiment of the present invention, the method for charging a self-moving device further includes: in a process of charging the self-moving device, detecting a current temperature of the wireless charging station and/or the self-moving device, and controlling, if the current temperature exceeds a preset threshold, the wireless charging station to stop charging the self-moving device continuously.

According to an embodiment of the present invention, the method for charging a self-moving device further includes: in a process of charging the self-moving device, detecting whether a living body enters a coverage of the wireless charging station; and controlling, if it is detected that a living body enters the coverage, the wireless charging station to stop charging the self-moving device continuously.

According to an embodiment of the present invention, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

According to an embodiment of the present invention, before the controlling the wireless charging station to radiate an electromagnetic signal outward by using the resonant coil component, the method further includes: detecting whether the self-moving device enters a coverage corresponding to a predetermined charging position; and controlling, if it is detected that the self-moving device enters the coverage corresponding to the predetermined charging position, the wireless charging station to enter a charging mode.

According to an embodiment of the present invention, the method for charging a self-moving device further includes: during charging, detecting whether charging of the self-moving device is completed, and if the charging has been completed, controlling the wireless charging station to enter, from the charging mode, a low-power consumption mode.

To achieve the foregoing objective, an embodiment of a fourth aspect of the present invention provides a charging protection method for a self-moving device, including the following steps: in a process of charging a self-moving device, detecting respective current temperatures of the self-moving device and a wireless charging station; and if one of the current temperatures exceeds a preset temperature threshold, performing control to perform over-temperature protection for charging.

According to the charging protection method provided in this embodiment of the present invention, in a process of charging a self-moving device, respective current temperatures of the self-moving device and a wireless charging station are detected, and if one of the current temperatures exceeds a preset temperature threshold, control is performed to perform over-temperature protection for charging. Therefore, according to the charging protection method provided in this embodiment of the present invention, by adding an over-temperature protection mechanism, the security of a charging process can be effectively improved, thereby improving user experience.

According to an embodiment of the present invention, the performing control to perform over-temperature protection for charging includes: controlling both a wireless charging transmitting module in the wireless charging station and a wireless charging receiving module in the self-moving device to be turned off, where the wireless charging transmitting module includes a resonant coil component disposed on a bottom plate of the wireless charging station.

According to an embodiment of the present invention, the performing control to perform over-temperature protection for charging includes: controlling the wireless charging transmitting module in the wireless charging station to be turned off; and sending indication information to the self-moving device, and turning off the wireless charging receiving module in the self-moving device according to the indication signal.

According to an embodiment of the present invention, the charging protection method for a self-moving device further includes: after charging is completed, controlling, if it is detected that the current temperature of the self-moving device exceeds the temperature threshold, the self-moving device to dock at the wireless charging station; and continuously detecting the current temperature of the self-moving device, and if the detected current temperature does not exceed the temperature threshold, controlling the self-moving device to start moving away from the wireless charging station.

To achieve the foregoing objective, an embodiment of a fifth aspect of the present invention provides another charging protection method for a self-moving device, including the following steps: in a process of charging a self-moving device, detecting whether a living body enters a coverage corresponding to a predetermined charging position; and controlling, if it is detected that a living body enters the coverage, the wireless charging station to stop charging the self-moving device continuously.

According to the charging protection method for a self-moving device provided in this embodiment of the present invention, in a process of charging a self-moving device, whether a living body enters a coverage of a wireless charging station is detected, and if it is detected that a living body enters the coverage, the wireless charging station is controlled to stop charging the self-moving device continuously. Therefore, according to the charging protection method provided in this embodiment of the present invention, impact of electromagnetic radiation on people or animals can be effectively reduced or avoided in a living body detection manner.

According to an embodiment of the present invention, the charging protection method for a self-moving device further includes: when charging is not completed, continuously detecting a living body that enters the coverage, and controlling, if it is detected that the living body leaves the coverage, the wireless charging station to charge the self-moving device again.

According to an embodiment of the present invention, a living body detection device is mounted on the wireless charging station or the self-moving device, and the method further includes: controlling the living body detection device to perform living body detection on the coverage in a charging mode.

According to an embodiment of the present invention, the detecting whether a living body enters a coverage of a wireless charging station includes: obtaining image information acquired by the living body detection device, performing feature extraction on the image information, and recognizing whether there is a living body in the coverage according to an extracted feature.

To achieve the foregoing objective, an embodiment of a sixth aspect of the present invention provides a charging energy-saving method, including the following steps: detecting whether a self-moving device enters a coverage corresponding to a predetermined charging position; controlling, if it is detected that the self-moving device enters the coverage corresponding to the predetermined charging position, a wireless charging station to enter a charging mode and charge the self-moving device; and in a charging process, detecting whether charging of the self-moving device is completed, and controlling, if the charging is completed, the wireless charging station to enter, from the charging mode, a low-power consumption mode.

According to the energy-saving method provided in this embodiment of the present invention, after a communication connection is established between a wireless charging station and a to-be-charged self-moving device, the wireless charging station is controlled to enter a charging mode and charge the self-moving device, and after charging is completed, the wireless charging station is controlled to enter, from the charging mode, a low-power consumption mode. Therefore, according to the energy-saving method provided in this embodiment of the present invention, after the charging is completed, the low-power consumption mode is entered, and energy can be effectively saved, thereby avoiding energy waste caused by a continuous discharging operation of the wireless charging station.

According to an embodiment of the present invention, the detecting whether the self-moving device enters a predetermined charging position includes: controlling the wireless charging station and the self-moving device to establish a wireless connection; and determining, if the wireless connection is successfully established between the wireless charging station and the self-moving device, that the self-moving device enters the coverage corresponding to the predetermined charging position.

According to an embodiment of the present invention, before the determining whether the self-moving device enters the coverage corresponding to the predetermined charging position, the method further includes: controlling the wireless charging station and the self-moving device to establish a wireless connection; and controlling, if the wireless connection is successfully established between the wireless charging station and the self-moving device, the wireless charging station to detect a signal strength of the wireless connection, and determining, if the signal strength of the wireless connection reaches a preset signal strength, that the self-moving device enters the coverage corresponding to the predetermined charging position.

According to an embodiment of the present invention, the detecting whether the self-moving device enters a coverage corresponding to a predetermined charging position includes: controlling the wireless charging station to send the low-frequency handshake signal outward by using the resonant coil component; controlling the wireless charging station to detect the response signal matching the low-frequency handshake signal; and determining, after the response signal is detected, that the self-moving device enters the coverage corresponding to the predetermined charging position.

According to an embodiment of the present invention, after the controlling the wireless charging station to enter a charging mode, the method further includes: controlling the wireless charging station to receive a request signal sent by the self-moving device, and controlling the wireless charging station to charge the self-moving device; or controlling the wireless charging station to send a request signal to the self-moving device, and controlling, after an answer signal matching the request signal is received, the wireless charging station to charge the self-moving device.

According to an embodiment of the present invention, after the determining that the self-moving device enters the coverage corresponding to the predetermined charging position, the method further includes: after the wireless connection is successfully established or the signal strength of the wireless connection reaches a predetermined strength, controlling the self-moving device to decelerate; and/or controlling the wireless charging station to start the resonant coil component of the wireless charging station.

According to an embodiment of the present invention, after the resonant coil component is started, the method further includes: controlling the resonant coil component to send a low-frequency handshake signal outward; controlling the wireless charging station to detect a response signal matching the low-frequency handshake signal; and determining, after the response signal is detected, that the self-moving device enters the coverage corresponding to the predetermined charging position.

To achieve the foregoing objective, an embodiment of a seventh aspect of the present invention provides a wireless charging station, including a bottom plate, where the bottom plate is provided with hollow holes; and only one resonant coil component, where the resonant coil component is disposed in the bottom plate.

According to the wireless charging station provided in this embodiment of the present invention, through cooperation between a bottom plate and only one resonant coil component, a structure of the wireless charging station can be simplified, to cause the structure of the wireless charging station to be simpler, thereby improving the aesthetics of the wireless charging station. In addition, only one resonant coil component is disposed on the wireless charging station, and production steps can be simplified, thereby improving the production efficiency of the wireless charging station.

According to an embodiment of the present invention, the hollow holes are rectangular.

According to an embodiment of the present invention, the bottom plate is provided with a coil component mounting groove, and the resonant coil component is mounted in the coil component mounting groove.

According to an embodiment of the present invention, an upper surface of the resonant coil component does not extend beyond an upper surface of the bottom plate.

According to an embodiment of the present invention, distances from the coil component mounting groove to two sides of the bottom plate in a width direction are the same.

According to an embodiment of the present invention, a distance between the coil component mounting groove and a front edge of the bottom plate is less than a distance between the coil component mounting groove and a rear edge of the bottom plate.

According to an embodiment of the present invention, the hollow holes are arranged on the bottom plate in rows and in columns, and avoid the coil component mounting groove.

To achieve the foregoing objective, an embodiment of an eighth aspect of the present invention provides a wireless charging system, including the wireless charging station described above; and a self-moving device, where a wireless charging receiving module is disposed on the self-moving device, and after it is determined that the self-moving device needs to be charged, the self-moving device moves to the wireless charging station, receives, by using the wireless charging receiving module, an electromagnetic signal sent by a resonant coil component of the wireless charging station, and is charged.

According to the wireless charging system in the present invention, an electromagnetic signal sent by a resonant coil component of the wireless charging station is received by using the wireless charging receiving module, to perform charging.

According to an embodiment of the present invention, the self-moving device includes wheels, a width of the wheel is L, and a width of the hollow hole is less than 0.8 L.

To achieve the foregoing objective, an embodiment of a ninth aspect of the present invention provides another wireless charging station, including a bottom plate; only one resonant coil component, where the resonant coil component is disposed in the bottom plate; and an in-place signal sensing member, disposed in the bottom plate, where the self-moving device determines, by sensing the in-place signal sensing member, that the self-moving device reaches a charging position on the bottom plate.

According to the wireless charging station in the present invention, an in-place signal sensing member is disposed in a bottom plate, and therefore the efficiency of charging, by the wireless charging station, the self-moving device can be effectively improved.

According to an embodiment of the present invention, the in-place signal sensing member is a magnetic member, and the self-moving device is provided with an inductor that magnetically induces the magnetic member.

According to an embodiment of the present invention, the magnetic member is a magnetic strip, a magnetic strip mounting groove is provided on the bottom plate, and the magnetic strip is mounted in the magnetic strip mounting groove.

According to an embodiment of the present invention, an upper surface of the magnetic strip does not extend beyond an upper surface of the bottom plate.

According to an embodiment of the present invention, the magnetic strip mounting groove extends in a width direction of the bottom plate and extends to two sides of the bottom plate in the width direction.

According to an embodiment of the present invention, an extending length of the magnetic strip is the same as that of the magnetic strip mounting groove.

According to an embodiment of the present invention, the in-place signal sensing member is a protrusion or a groove constructed on the upper surface of the bottom plate, to form a fluctuating section on the bottom plate, and the self-moving device determines, by detecting a current change of the self-moving device when passing through the fluctuating section, that the self-moving device reaches the charging position.

According to an embodiment of the present invention, the in-place signal sensing member extends in the width direction of the bottom plate, and there are a plurality of in-place signal sensing members and the in-place signal sensing members are disposed at intervals in the width direction of the bottom plate.

According to an embodiment of the present invention, the in-place signal sensing member is in at least one of a rectangle, a trapezoid, an inverted trapezoid, a U shape, and an inverted U shape.

According to an embodiment of the present invention, the in-place signal sensing member is located on a rear side of the resonant coil component.

According to an embodiment of the present invention, a guide rail is disposed on the bottom plate.

To achieve the foregoing objective, an embodiment of a tenth aspect of the present invention provides another wireless charging system, including the another wireless charging station described above; and a self-moving device, where a wireless charging receiving module is disposed on the self-moving device, and when the self-moving device needs to be charged, the self-moving device moves to the bottom plate, and the wireless charging receiving module is opposite to the resonant coil component to perform charging.

According to the wireless charging system provided in this embodiment of the present invention, returning and charging of a self-moving device can be performed by a wireless charging station.

According to an embodiment of the present invention, the wireless charging station is the wireless charging station according to any one of claims 68 to 72, the in-place signal sensing member is a protrusion, and a height of the in-place signal sensing member is greater than 1/10 of a radius of a wheel and less than 1/2 of the radius of the wheel.

According to an embodiment of the present invention, the wireless charging station is the wireless charging station according to any one of claims 73 to 75, the in-place signal sensing member is a groove, and a height of the in-place signal sensing member is greater than 1/10 of the radius of the wheel and less than a thickness of the bottom plate.

To achieve the foregoing objective, an embodiment of an eleventh aspect of the present invention provides still another wireless charging station, configured to charge a self-moving device, the wireless charging station including: a temperature detection module, configured to detect, in a process of charging the self-moving device, respective current temperatures of the self-moving device and the wireless charging station; and a control module, configured to perform control, if one of the current temperatures exceeds a preset temperature threshold, to perform over-temperature protection for charging.

To achieve the foregoing objective, an embodiment of a twelfth aspect of the present invention provides yet another wireless charging station, configured to charge a self-moving device, the wireless charging station including: a living body detection module, configured to detect, in a process of charging the self-moving device, whether a living body enters a coverage corresponding to a predetermined charging position; and a control module, configured to control, if it is detected that a living body enters the coverage, the wireless charging station to stop charging the self-moving device continuously.

To achieve the foregoing objective, an embodiment of a thirteenth aspect of the present invention provides yet another wireless charging station, including: a position detection module, configured to detect whether a self-moving device enters a coverage corresponding to a predetermined charging position; and a control module, configured to control, if it is detected that the self-moving device enters the coverage corresponding to the predetermined charging position, the wireless charging station to enter a charging mode and charge the self-moving device, detect, in a charging process, whether charging of the self-moving device is completed, and control, if the charging is completed, the wireless charging station to enter, from the charging mode, a low-power consumption mode.

Additional aspects and advantages of the present invention will be given in part in the following description, and will become apparent in part from the following description or learned by practice of the present invention.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a schematic diagram of an automatic working system according to an embodiment of the present invention.
FIG. 2 is a top view of a bottom plate of a wireless charging station according to an embodiment of the present invention.
FIG. 3 is a side view of a bottom plate of a wireless charging station according to an embodiment of the present invention.
FIG. 4a is a schematic diagram of a process of adjusting and docking a self-moving device on a bottom plate according to an embodiment of the present invention.
FIG. 4b is a schematic diagram of another process of adjusting and docking a self-moving device on a bottom plate according to an embodiment of the present invention.
FIG. 5 is a schematic diagram in which a guide rail is disposed on a bottom plate according to an embodiment of the present invention.
FIG. 6 is a schematic diagram in which an operation module and an indicator light are disposed on a bottom plate according to an embodiment of the present invention.
FIG. 7 is a schematic diagram in which a sunshine shed is disposed on a bottom plate according to an embodiment of the present invention.
FIG. 8 is a schematic diagram in which a self-moving device docks under a sunshine shed according to an embodiment of the present invention.
FIG. 9 is a schematic diagram of a process in which a self-moving device returns to a bottom plate in a "reverse parking" manner according to an embodiment of the present invention.
FIG. 10 is a schematic diagram in which a self-moving device docks on a bottom plate in a "reverse parking" manner according to an embodiment of the present invention.
FIG. 11 is a schematic diagram in which holding portions are disposed on two sides of a bottom plate according to an embodiment of the present invention.
FIG. 12 is a schematic diagram of a self-moving device according to an embodiment of the present invention.
FIG. 13 is a schematic diagram in which a self-moving device docks on a bottom plate according to an embodiment of the present invention.
FIG. 14 is a top view of a wireless charging station according to an embodiment of the present invention.
FIG. 15 is a front view of a wireless charging station according to an embodiment of the present invention.
FIG. 16 is a top view of a self-moving device according to an embodiment of the present invention.
FIG. 17 is a top view of a bottom plate of a wireless charging station according to an embodiment of the present invention.
FIG. 18 is a partial enlarged view of a bottom plate of a wireless charging station according to an embodiment of the present invention.
FIG. 19 is a schematic diagram in which a guide rail of a wireless charging station is disposed on a bottom plate according to an embodiment of the present invention.
FIG. 20 is a schematic diagram when an in-place signal sensing member of a wireless charging station is a protrusion according to an embodiment of the present invention.
FIG. 21 is a schematic diagram when an in-place signal sensing member of a wireless charging station is a groove according to an embodiment of the present invention.
FIG. 22 is a schematic structural diagram of a wireless charging system according to an embodiment of the present invention.
FIG. 23 is a flowchart of a method for charging a self-moving device according to an embodiment of the present invention.
FIG. 24 is a flowchart of a method for charging a self-moving device according to an embodiment of Embodiment 1 of the present invention.
FIG. 25 is a flowchart of a method for charging a self-moving device according to another embodiment of Embodiment 1 of the present invention.
FIG. 26 is a flowchart of a method for charging a self-moving device according to still another embodiment of Embodiment 1 of the present invention.
FIG. 27 is a flowchart of a method for charging a self-moving device according to yet another embodiment of Embodiment 1 of the present invention.
FIG. 28 is a flowchart of a method for charging a self-moving device according to yet another embodiment of Embodiment 1 of the present invention.
FIG. 29 is a flowchart of a method for charging a self-moving device according to yet another embodiment of Embodiment 1 of the present invention.
FIG. 30 is a flowchart of a method for charging a self-moving device according to Embodiment 2 of the present invention.
FIG. 31 is a schematic diagram of positions of a magnetic member and a resonant coil component according to Embodiment 2 of the present invention.
FIG. 32 is a flowchart of another method for charging a self-moving device according to Embodiment 2 of the present invention.
FIG. 33 is a flowchart of a method for charging a self-moving device according to Embodiment 3 of the present invention.

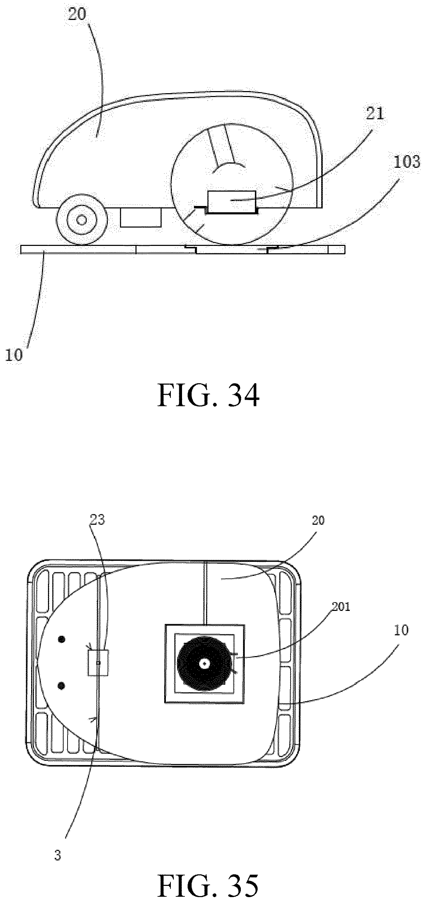

FIG. 34 is a cross-sectional side view of a docking state of a wireless charging station and a self-moving device according to an embodiment of the present invention.
FIG. 35 is a top view of a docking state of a wireless charging station and a self-moving device according to an embodiment of the present invention.

### DETAILED DESCRIPTION

Detail description of the embodiments of the present invention will be made in the following, and examples thereof are illustrated in the accompanying drawings, throughout which identical or similar elements or elements of identical or similar functions are represented with identical or similar reference numerals. The following embodiments described with reference to the accompanying drawings are exemplary, and are intended to describe the present invention and cannot be construed as a limitation to the present invention.

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

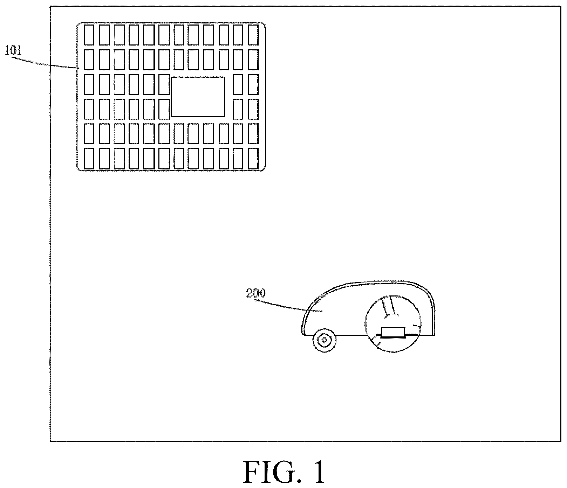

As shown in FIG. 1, an embodiment of the present invention provides a wireless charging station 100. The wireless charging station 100 may charge a self-moving device 200, that is, supply power to the self-moving device 200, and the wireless charging station 100 may be disposed inside or outside a working region, for example, may be disposed at a boundary position of the working region. The self-moving device 200 may move in the working region according to a type of the device and perform different working tasks. When meeting a charging condition, the self-moving device 200 moves toward the wireless charging station 100, and when being aligned with the wireless charging station 100, the self-moving device 200 performs a charging operation by using the wireless charging station 100 to obtain power. The self-moving device 200 provided in this embodiment of the present invention is configured to intelligently perform an operation task, thereby freeing the user from time-consuming and labor-consuming cumbersome work. The self-moving device 200 may be an automatic or semi-automatic machine such as an intelligent lawn mower, an intelligent sweeper, an intelligent snow sweeper, an intelligent sprinkler, or an intelligent camera robot. In the following embodiments, an example in which the self-moving device 200 is an intelligent lawn mower is used.

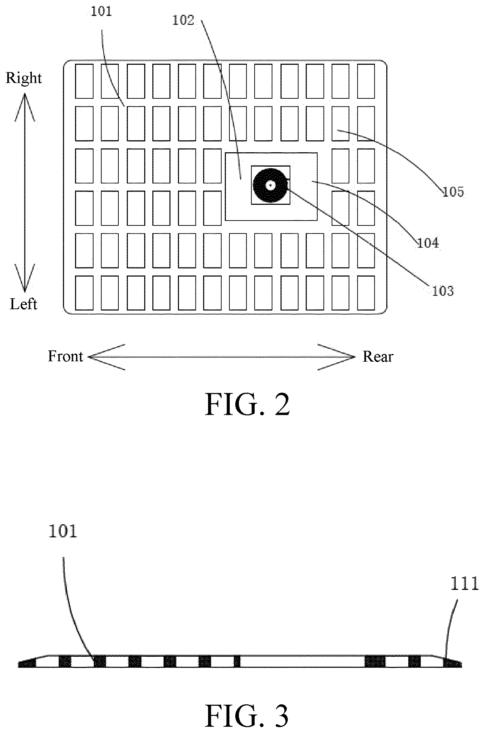

As shown in FIG. 2, the wireless charging station 100 includes a bottom plate 101 laid flat on a ground, and a wireless transmitting module 102 is fixed on the bottom plate 101. The wireless transmitting module 102 is provided with at least one resonant coil transmitting component 103, and the resonant coil transmitting component 103 oscillates to transmit an electromagnetic signal. After entering the bottom plate 101, the self-moving device 200 receives the electromagnetic signal to perform the charging operation. Specifically, one side of the bottom plate 101 is connected to a power supply input end (not shown in the figure). For example, the bottom plate is connected to a mains supply by the power supply input end to supply power to the wireless transmitting module 102. After the self-moving device 200 returns to the bottom plate 101 and is successfully docked with the wireless transmitting module 102, the bottom plate 101 transmits the electromagnetic signal by using the resonant coil transmitting component 103, and a wireless receiving module of the self-moving device 200 receives the electromagnetic signal to generate electrical energy for charging the self-moving device, thereby ensuring that power is supplied for stable working of the self-moving device 200. In this embodiment of the present invention, resonant charging is adopted for the wireless charging station 100 and the self-moving device 200. Specifically, the resonant coil transmitting component 103 and a resonant coil receiving component resonate at the same frequency, so that energy of the resonant coil transmitting component 103 is transferred to the resonant coil receiving component, to complete wireless charging. No strict alignment is required between the wireless transmitting module 102 and the wireless receiving module that adopt a resonant wireless charging principle, a vertical distance between the wireless transmitting module and the wireless receiving module may be 70 mm to 80 mm, a horizontal deviation may be 3 cm, and normal charging can be still performed in a case that there is a deviation between the wireless transmitting module and the wireless receiving module. Therefore, according to a resonant wireless charging system adopted in the present invention, the precision requirement for docking between the self-moving device 200 and the wireless charging station 100 is lowered, so that a docking success rate is higher. In this embodiment of the present invention, the wireless transmitting module 102 is provided with at least one resonant coil transmitting component 103, and there is no limitation on a quantity of coils. Certainly, in another embodiment, there may be alternatively one resonant coil transmitting component 103. Such arrangement can effectively reduce costs and simplify a structure of the wireless charging station 100, thereby improving the aesthetics of the wireless charging station 100. As a cooperation, there is also no limitation on a quantity of resonant coil receiving components in a wireless charging receiving module on the self-moving device 200, and the resonant coil transmitting component and the resonant coil receiving component cooperate to transfer power.

In a specific embodiment, a height of the bottom plate 101 is 15 mm to 25 mm, for example, 20 mm. In this case, when it is ensured that the wireless transmitting module works normally, the height of the bottom plate that is laid flat on the ground does not hinder the self-moving device from returning, and the aesthetics and safety of the wireless charging station are improved.

Referring to FIG. 2 and FIG. 3, when the wireless transmitting module 102 is fixed on the bottom plate 101, an upper surface of the wireless transmitting module 102 does not extend beyond an upper surface of the bottom plate 101. Specifically, the bottom plate 101 is provided with a mounting groove 104, the wireless transmitting module 102 is mounted in the mounting groove 104, and the wireless transmitting module 102 and the mounting groove 104 may be fixed by a threaded structure. For example, mounting holes are respectively provided on the wireless transmitting module 102 and the mounting groove 104, screws are fixed to nuts by passing through the mounting holes, and finally the wireless transmitting module 102 is fixed to the bottom plate 101. Certainly, another fixing manner may be alternatively adopted, provided that it is ensured that the wireless transmitting module 102 is stably fixed on the bottom plate 101 and is not loosened. A cross section of an opening of the mounting groove 104 may be a square, and there is no design frame above the opening of the mounting groove 104. When the self-moving device 200 needs to be charged, such arrangement may facilitate wireless charging docking between the wireless charging station 100 and the self-moving device 200, and make the wireless transmitting module 102 easy to disassemble and mount.

In a specific embodiment, distances from the wireless transmitting module 102 to two sides of the bottom plate 101 in a width direction may be set to be the same. It should be noted that the width direction of the bottom plate 101 refers to a left-right direction in FIG. 2. Such arrangement can make a disposition position of the wireless transmitting module 102 more appropriate, to improve the structural consistency between the left and right sides of the bottom plate 101, thereby making the bottom plate 101 more aesthetic.

As shown in FIG. 2, the bottom plate 101 may be provided with a plurality of hollow holes 105. Because grass grows under the bottom plate 101, and the grass grows increasingly tall, the hollow holes 105 are provided on the bottom plate 101, to allow vegetation such as grass to pass through the hollow holes 105 for growing without affecting the normal growth of the grass below the bottom plate 101.

In a specific embodiment, the hollow hole 105 may be set to be circular, and the circular hollow hole 105 does not affect movement of the self-moving device 200 on the bottom plate 101, so that wheels of the self-moving device 200 travel on the bottom plate 101 more smoothly. Specifically, a size of the circular hole 105 is related to a wheel size of the intelligent lawn mower, to ensure that when the intelligent lawn mower returns to the bottom plate 101, the wheels are not stuck in the circular hole. In a specific embodiment, two rows of staggered wheel tooth structures are disposed on the wheels in a circumferential direction, and the wheel tooth structures make the walking of the self-moving device 200 more stable. The size of the circular hole is less than that of the wheel tooth structure to prevent the wheel teeth from being stuck in the circular hole. In a specific embodiment, a length of the wheel tooth is about 2 cm, and the size of the circular hole 105 is less than 2 cm, for example, 1.5 cm to 1.9 cm. In addition, the shape of the hollow hole 105 may be alternatively a rectangle, and the rectangle includes a square and a rectangle. In addition to ensuring that the self-moving device 200 can walk on the bottom plate 101 smoothly and the docking efficiency is not affected, the shape of the hollow hole 105 further needs to meet conditions that the grass growing from the hollow holes 105 is more uniform and the aesthetic of the bottom plate 101 is not affected.

In a specific embodiment, the hollow holes 105 may be evenly arranged on the bottom plate 101 in rows and in columns. In this way, arrangement positions of the hollow holes 105 can be more regular, and a structural strength of the bottom plate 101 can be improved, thereby improving the working reliability of the bottom plate 101. In addition, the evenly arranged hollow holes 105 can improve the structural consistency between the hollow holes 105, so that the bottom plate 101 can be more aesthetic. In addition, the hollow holes 105 avoid the mounting groove 104. In this way, the hollow holes 105 and the mounting groove 104 can be prevented from interfering with each other, thereby ensuring that the wireless transmitting module 102 can be mounted in the mounting groove 104.

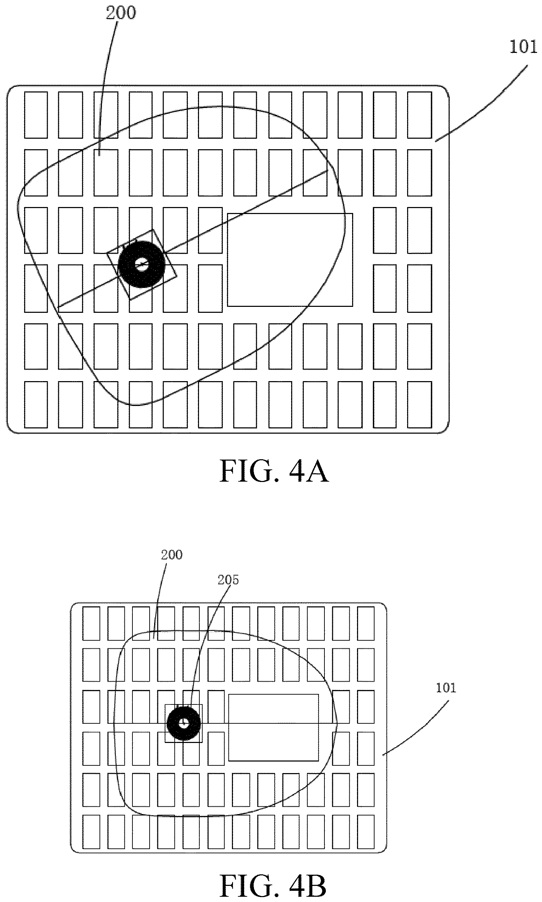

In a specific embodiment, a length of the bottom plate 101 is set to 1.4 times to 2 times a length of the self-moving device 200, and a width of the bottom plate 101 exceeds a width of the self-moving device 200 by 10% to 30%. In this way, it can be ensured that when the self-moving device 200 adjusts a position of the self-moving device for a plurality of times to find a predetermined charging position, the self-moving device 200 adjusts the position of the self-moving device on the bottom plate 101 (as shown in FIG. 4a and FIG. 4b). A case that when adjusting the position of the self-moving device, the self-moving device 200 exits the bottom plate 101 due to the insufficient size of the bottom plate 101 and crushes a lawn outside the bottom plate 101 for a plurality of times, resulting in damage to the lawn near the bottom plate 101 does not occur. The predetermined charging position is a position in which the resonant transmitting coil component 103 is aligned with the resonant receiving coil component. It may be understood that there may be a particular deviation between the resonant transmitting coil component 103 and the resonant receiving coil component, for example, a deviation of 2 cm to 3 cm may exist in a horizontal direction. In this embodiment, the size of the bottom plate 101 is appropriate and proper. It is ensured that the self-moving device 200 adjusts the position of the self-moving device on the bottom plate 101 and does not crush the lawn near the bottom plate 101, and the requirements of convenient transportation and mounting for a user are also met. In addition, cases that a large area of working region is occupied due to an excessively large size of the bottom plate 101 and the growth of a large area of lawn is affected do not occur.

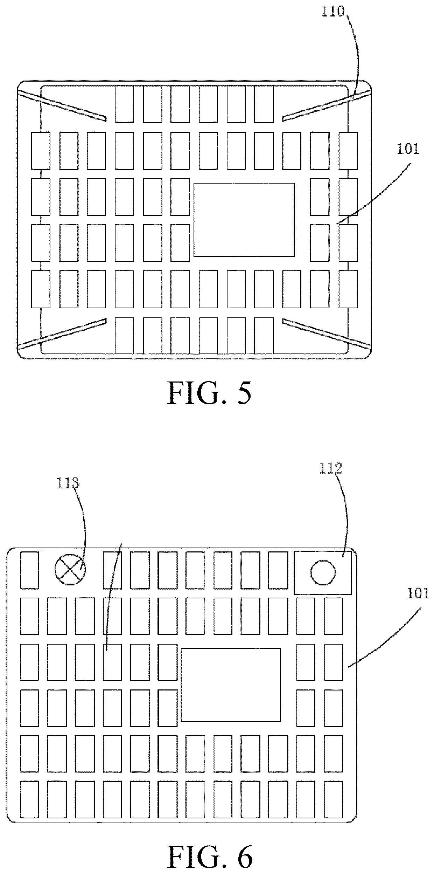

In a specific embodiment, a docking guidance structure is disposed on the bottom plate 101, and correspondingly, a docking guidance detection structure is disposed on the self-moving device 200, so that the self-moving device 200 may be guided by sensing the docking guidance structure on the bottom plate 101 to dock at the predetermined charging position. The docking guidance structure may be a mechanical structure disposed on the bottom plate. As shown in FIG. 5, the mechanical structure is, for example, a guide rail structure 110, the guide rail structure is a convex rib structure in a horn mouth shape, and the convex rib structure is configured to guide a movable device of the self-moving device to move, to return to the predetermined charging position smoothly. The guide rail structure 110 may be alternatively an inverted trough and track structure that is similar to a horn mouth and that is disposed on the bottom plate. When returning to the bottom plate, the self-moving device can enter the inverted trough structure of the horn mouth smoothly by adjusting the position of the self-moving device, to automatically dock at the predetermined charging position under the guidance of the track. The guide rails 110 are disposed, making the accurate docking of the self-moving device more convenient. To ensure that wheels of the self-moving device enter the guide rails normally, edge distances of two guide rails should match wheel distances of the self-moving device, to ensure smooth entrance/exit of the self-moving device, and play a role in improving the precision of the docking.

In another specific embodiment, the docking guidance structure may be alternatively an electronic structure disposed on the bottom plate. For example, the docking guidance structure is a sensing structure, where the sensing structure and the self-moving device sense each other. The self-moving device senses the sensing structure to guide the self-moving device to dock at the predetermined charging position. For example, the sensing structure may be a magnetic component disposed on the bottom plate, and a magnetism detection component on the self-moving device detects a signal of the magnetic component, to guide the self-moving device to dock at the predetermined charging position. In another example, the sensing structure is a guide wire disposed on the bottom plate, the guide wire is electrified to generate a magnetic signal, and a magnetic field signal sensor on the self-moving device detects the magnetic signal of the guide wire to guide the self-moving device to dock at the predetermined charging position.

As shown in FIG. 3, to facilitate docking of the self-moving device, in this embodiment of the present invention, an inclined structure 111 rising from a bottom surface is disposed on a front side of the bottom plate 101. When returning to the vicinity of the bottom plate 101, the self-moving device 200 may return to the bottom plate 101 smoothly along the inclined structure 111. That is, the inclined structure 111 enables the movable device of the self-moving device 200 to smoothly move to the bottom plate 101 from an outer side of the bottom plate 101, thereby reducing resistance to movement.

As shown in FIG. 6, in a specific embodiment, an operation module 112 is disposed on the bottom plate 101, and work of the wireless transmitting module 102 may be started by triggering the operation module 112. For example, when the self-moving device 200 returns to the bottom plate 101 for charging, in a general case, the self-moving device 200 transmits a signal to the wireless transmitting module 102 to start the resonant coil transmitting component 102 to transmit an electromagnetic wave outward. However, when an amount of power of the self-moving device 200 is insufficient and the self-moving device fails to transmit a signal of starting the wireless transmitting module 102 outward, the user may manually trigger the operation module 112 such as a key on the bottom plate. When the key 112 is pressed, the wireless transmitting module 102 can be started, to transmit the electromagnetic wave outward for charging the self-moving device 200.

In another embodiment, an indicator light 113 is further disposed on the bottom plate 101, a working state of the bottom plate is indicated by the indicator light 113. Specifically, a power supply state and/or a charging state of the bottom plate 101 may be indicated. For example, when a power supply input end does not supply power to the wireless transmitting module 102, the indicator light 113 is off, and when the power supply input end supplies power to the wireless transmitting module 102, the indicator light 113 is green. In this case, it indicates that the bottom plate 101 is in a standby state. When the wireless transmitting module 102 charges the self-moving device 200, the indicator light 113 flashes; when the wireless transmitting module 102 charges the self-moving device 200 completely, the indicator light 113 is red; and when charging is abnormal, the indicator light 113 flashes faster, and sound alarm may be alternatively generated to remind the user to process the abnormal case. It may be understood that the solution of the indicator light in the present invention is not limited to the foregoing embodiments, and all other implementable solutions that use the indicator light to provide indication help for the working state of the bottom plate are feasible.

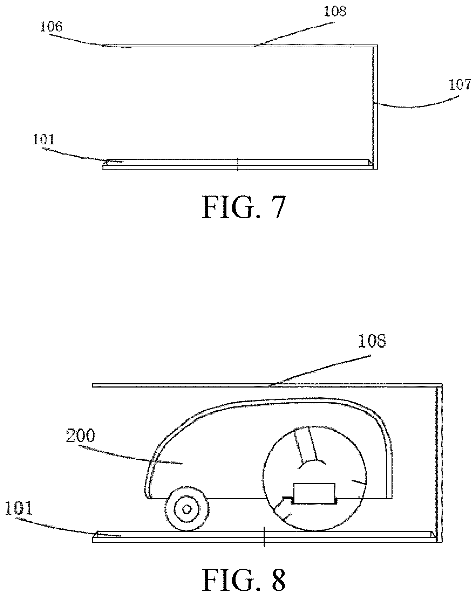

As shown in FIG. 7 and FIG. 8, in a specific embodiment, a sunshine shed structure 106 is disposed on one side of the bottom plate 101, and the sunshine shed structure 106 includes a support 107 and a shed body 108 connected to the support. When the self-moving device 200 docks on the bottom plate 101, a projection of the shed body structure 108 on a horizontal plane covers a projection of the self-moving device 200 on the horizontal plane when docking at the wireless charging station 100. In this way, when the self-moving device 200 docks on the bottom plate 101, the sheltering of the sunshine shed structure 106 plays a role in sun-shading and rain-proofing for the self-moving device 200, so that a case that the self-moving device 200 has been exposed for a long time, resulting in aging and easy damage is avoided. In this embodiment, the sunshine shed structure 106 is disposed on a rear side of the bottom plate 101. In this way, it may be ensured that when returning to the bottom plate 101, the self-moving device 200 needs to adjust the position of the self-moving device to find the predetermined charging position, to reduce collision with the support 107 of the sunshine shed on the rear side.

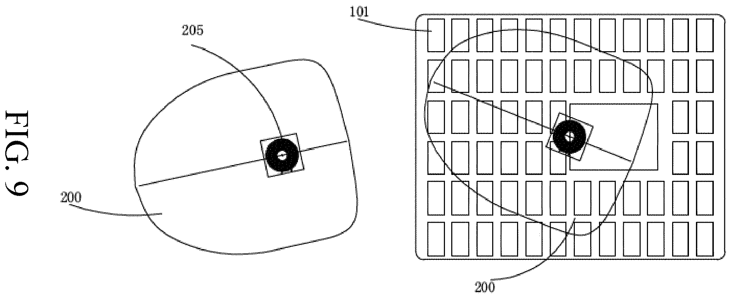

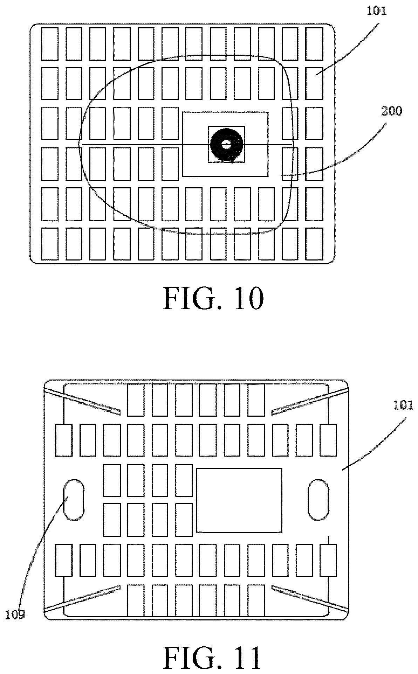

In a specific embodiment, the wireless transmitting module 102 may be disposed in the middle or the rear of the bottom plate 101. When the wireless transmitting module is disposed in the middle or the rear, it is more convenient for the docking between the self-moving device 200 and the wireless charging station 100. For example, when returning to the vicinity of the wireless transmitting module 102, the self-moving device 200 needs to adjust the position of the self-moving device to reach the predetermined charging position (that is, find a docking point), and the wireless transmitting module 102 is disposed on the rear side of the bottom plate 101, so that the self-moving device 200 has a larger adjustment space on the bottom plate 101, to avoid a case that the self-moving device 200 adjusts the position of the self-moving device outside the bottom plate 101 and crushes the lawn near the bottom plate 101 for a plurality of times. In a specific embodiment, the wireless receiving module of the self-moving device 200 is disposed in a rotation center of the self-moving device 200, for example, disposed in a center of two driving wheels on the rear side of the self-moving device. As shown in FIG. 9, when the self-moving device 200 returns to the vicinity of the bottom plate 101, the self-moving device 200 rotates the position of the self-moving device, so that the self-moving device 200 adopts a manner in which the rear side first enters the bottom plate 101. Such a "reverse parking" manner makes returning of the self-moving device 200 smoother and improves the efficiency of docking between the wireless receiving module of the self-moving device 200 and the wireless transmitting module 102 on the bottom plate 101. As shown in FIG. 10, finally, the self-moving device 200 smoothly returns to the predetermined charging position. It should be noted that, in this embodiment of the present invention, a forward direction, that is, a driving direction, of the self-moving device 200 is set to the front, and a direction opposite to the driving direction is set to the rear. When the self-moving device 200 returns to the bottom plate 101, one side of the bottom plate 101 that the self-moving device 200 first enters is the front of the bottom plate 101, and correspondingly, the other side is the rear (referring to the front and the rear of the bottom plate marked in FIG. 2, other drawings have the same direction as that in FIG. 2). Certainly, in another embodiment, the wireless receiving module may be disposed in the middle or the front of the self-moving device 200. When the wireless receiving module is disposed in the middle, the self-moving device 200 may alternatively enter the bottom plate of the charging station in the "reverse parking" manner. In this case, if the wireless transmitting module 102 is also disposed in the middle of the bottom plate 101, and when the self-moving device 200 docks at the predetermined charging position, the self-moving device 200 exactly docks in the middle of the bottom plate 101. When the wireless receiving module is disposed in the front of the self-moving device 200, the self-moving device 200 may return to the wireless charging station 100 in the manner in which a head first enters the bottom plate 101.

Based on the foregoing, in this embodiment of the present invention, the wireless transmitting module 102 may be disposed at any position on the bottom plate 101, preferably disposed in the middle or the rear of the bottom plate 101, to reduce crushing of the lawn outside the bottom plate 101 when the self-moving device 200 adjusts the position for a plurality of times during returning. Similarly, the wireless receiving module may be disposed at any position on the self-moving device 200, preferably disposed at the bottom, to better sense the wireless transmitting module 102 and improve the charging efficiency. The wireless receiving module may be specifically disposed in the rotation center of the self-moving device 200, to accurately adjust the position of the wireless receiving module. For example, the wireless receiving module may be disposed in the center of the two driving wheels on the rear side of the self-moving device 200. Certainly, that the wireless receiving module is disposed at any position such as in the middle or the front of the self-moving device 200 is feasible.

Therefore, with reference to the disposition position of the wireless transmitting module 102 and the disposition position of the wireless receiving module, the manner in which the self-moving device 200 returns to the bottom plate 101 is not limited either. The head may first enter the bottom plate 101, that is, the self-moving device returns to the bottom plate 101 normally in the driving direction, or the self-moving device may enter the bottom plate 101 of the charging station in the "reverse parking" manner, to be smoothly docked with the wireless charging station 100, thereby reducing crushing of the lawn outside the bottom plate 101 and reducing collision of the sunshine shed 106.

As shown in FIG. 11, in a specific embodiment, at least one holding portion is disposed on the bottom plate 101. Specifically, the holding portions may be handle structures 109 mounted on two sides of the bottom plate 101. When the user needs to carry the bottom plate 101, the user holds two handles 109 on the bottom plate 101 in hands, which can save physical strength and help the user to perform actions such as carrying and mounting. It may be understood that a structure of the holding portion is not limited. For example, the holding portions may be groove structures that are disposed on two sides of the bottom plate 101 and are convenient for hand insertion. The structure and the position of the holding portion 1 are not limited, provided that an ergonomic requirement is met and it is convenient for the user to hold.

In another specific embodiment, for facilitating carrying and mounting of the wireless transmitting module 102, a holding portion may be also disposed on the wireless transmitting module 102, and the disposition position and the specific structure of the holding portion are similar to those of the holding portion on the bottom plate 101. Details are not described again.

In a specific embodiment, the wireless charging station 100 includes a temperature detection device. A current temperature of the wireless charging station 100 and/or the self-moving device 200 is detected by using the temperature detection device, and if at least one of the current temperatures exceeds a temperature threshold, the wireless charging station 100 and/or the self-moving device 200 is controlled to perform an over-temperature protection action. The over-temperature protection action may be performed by the wireless charging station 100, or may be performed by the self-moving device 200.

The following two cases are included.

When the self-moving device 200 is being charged at the wireless charging station 100, and if the temperature detection device detects that at least one of current temperatures exceeds a temperature threshold, the wireless charging station 100 and/or the self-moving device 200 is controlled to turn off the wireless transmitting module 102 and the wireless receiving module. For example, the wireless charging station 100 is controlled to turn off the wireless transmitting module 102 and send an instruction to the self-moving device 200, and the self-moving device also turns off the wireless receiving module.

When charging of the self-moving device 200 is completed, and if the temperature detection device detects that at least one of the current temperatures exceeds the temperature threshold, the wireless charging station 100 sends an instruction to the self-moving device 200, and the self-moving device 200 is controlled to dock at the wireless charging station 100. It may be understood that after the over-temperature protection action is performed, the temperature detection device still detects a temperature of the wireless charging station 100 and/or the self-moving device 200. If the current temperature of the wireless charging station 100 and/or the self-moving device 200 is less than the temperature threshold, the self-moving device 200 is controlled to depart from the wireless charging station 100. In this embodiment, the temperature threshold is preset, including a preset temperature threshold of the wireless charging station 100 and a preset temperature threshold of the self-moving device 200, a range of the temperature threshold may be between 45°C and 50°C, and a temperature exceeding the temperature threshold may cause injury to a living thing. it may be understood that a docking time of the self-moving device 200 varies as an outdoor temperature varies. When the outdoor temperature is high, the docking time is long, and when the outdoor temperature is low, the docking time is short. Deformably, after the over-temperature protection action is performed, whether the temperature of the wireless charging station 100 falls below the temperature threshold may be alternatively not detected, and the docking time of the self-moving device 200 may be detected. According to a function relationship between the outdoor temperature and the docking time, the time for which the self-moving device 200 docks and that can ensure that the temperature of the wireless charging station 100 and/or the self-moving device 200 is less than the temperature threshold can be obtained. When it is detected that the docking time meets a condition, the self-moving device 200 is controlled to depart.

In this embodiment, the temperature detection device may be alternatively disposed on the self-moving device 200. In this case, when it is detected, by the temperature detection device, that the temperature of the wireless charging station 100 and/or the self-moving device 200 exceeds the temperature threshold, the self-moving device 200 is controlled to dock on the wireless charging station 100. When the temperature falls below the temperature threshold, the self-moving device 200 is controlled to depart from the charging station. In this manner, a process in which the wireless charging station 100 sends a stop instruction to the self-moving device 200 is omitted, and the control process is simpler.

In a specific embodiment, the self-moving device 200 is incapable of successfully docking with the wireless charging station 100 when returning to the wireless charging station 100, that is, the self-moving device 200 cannot detect an optimal docking position after adjusting the position of the self-moving device for a plurality of times, for example, cannot detect a point with a largest magnetic field strength or detects an abnormal magnetic field strength after a plurality of times of detection. In this case, the self-moving device 200 determines that the self-moving device cannot be docked with the wireless charging station 100 successfully. In this case, the self-moving device 200 sends a standby instruction to the wireless charging station 100, to control the wireless transmitting module 102 to stand by. For example, the wireless transmitting module 102 is controlled to stop transmitting an electromagnetic wave outward, only a communication function is enabled, and then the self-moving device 200 is controlled to stop as required. In this way, the energy of the wireless transmitting module 102 can be saved.

It may be understood that the self-moving device 200 and the wireless charging station 100 each include a wireless communication module, and the wireless communication module is, for example, a radio frequency module. The self-moving device 200 communicates with the wireless charging station 100 by using the radio frequency modules, and therefore the communication manner is more stable and reliable. Certainly, the wireless communication module may be alternatively a communication module such as a Bluetooth module, a Zigbee module, a 433M module, or an 868M module. In another embodiment, the self-moving device 200 may alternatively communicate with the wireless charging station 100 by using an electromagnetic wave transmitted by a coil component. In this case, a frequency of transmitting the electromagnetic wave by the coil component for communication is much less than a frequency of transmitting the electromagnetic wave for charging. The coil component for communication between the self-moving device and the wireless charging station may be a resonant transmitting coil component and a resonant receiving coil component, or may be an additionally disposed coil component.

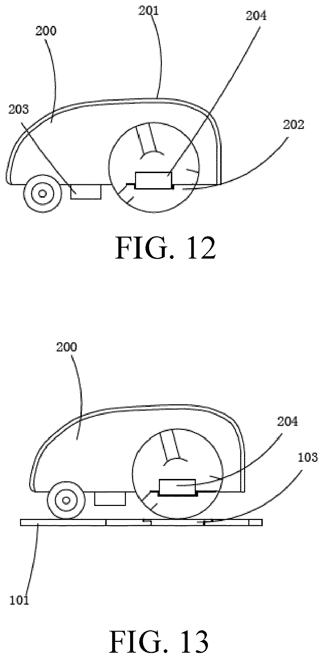

As shown in FIG. 12, an embodiment of the present invention further provides a self-moving device 200 that is charged by the wireless charging station 100 described above. The self-moving device 200 includes a housing 201; a movable device 202, mounted on the housing 201 and configured to support the housing 201 and drive the self-moving device 200 to move, where the movable device 202 includes driving wheels symmetrically disposed on two sides of the housing 201; a working device 203, mounted on the housing 201 and configured to perform a working task, where an example of an intelligent lawn mower is used, and the working device 203 is a cutting device configured to cut grass in a working region; and a power supply device, mounted in the housing 201 and configured to supply power to the movable device 202 and the working device 203. It may be understood that the power supply device is a secondary battery, for example, a lithium battery. When the self-moving device 200 is aligned with the wireless charging station 100, power of the wireless charging station 100 can charge the secondary battery, to supply power to work of the self-moving device 200. The wireless charging station 100 is the wireless charging station 100 in the foregoing embodiments and includes a bottom plate 101 and a wireless transmitting module 102 fixed to the bottom plate 101, and the wireless transmitting module 102 is provided with at least one resonant coil transmitting component 103. The self-moving device 200 includes a wireless receiving module 204, and the wireless receiving module 204 also includes at least one resonant coil receiving component 205. Specifically, there may be alternatively one resonant coil receiving component 205, to reduce costs and simplify a structure. As shown in FIG. 13, when the self-moving device 200 docks on the bottom plate 101, the wireless transmitting module 102 is aligned with the wireless receiving module 204, that is, the resonant coil receiving component 205 is aligned with the resonant coil transmitting component 103. An electromagnetic signal transmitted by the resonant coil transmitting component 103 is received by using the resonant coil receiving component 205, to supply power to the power supply device. Specifically, the resonant coil receiving component 205 is disposed at the bottom of the self-moving device 200, preferably disposed in a rotation center of the self-moving device 200, for example, disposed in a symmetry center of two driving wheels on a rear side of the self-moving device 200. In this way, a position of the wireless receiving module 204 may be adjusted by adjusting the rotation center of the self-moving device 200, so that the self-moving device 200 may accurately adjust the position of the wireless receiving module by adjusting a position of the self-moving device, to be smoothly docked with the wireless charging station 100. Certainly, the wireless receiving module 204 may be alternatively disposed at any position such as in the middle or the front of the self-moving device, provided that normal work and normal charging of the self-moving device are not affected.

In a specific embodiment, the self-moving device 200 includes a temperature detection device. A current temperature of the wireless charging station 100 and/or the self-moving device 200 is detected by the temperature detection device, and if one or two of the current temperatures exceed a temperature threshold, the self-moving device 200 and/or the wireless charging station 100 is controlled to perform an over-temperature protection action. It may be understood that the over-temperature protection action may be performed by the self-moving device 200, or may be performed by the wireless charging station 100.

The following two specific cases are also included.

When the self-moving device 200 is being charged at the wireless charging station 100, and if the temperature detection device detects that the current temperature of the self-moving device 200 and/or the wireless charging station 100 exceeds the temperature threshold, the wireless charging station 200 and/or the self-moving device 100 is controlled to turn off the wireless transmitting module 102 and the wireless receiving module 204. For example, the self-moving device 200 is controlled to turn off the wireless receiving module 204 and send an instruction to the wireless charging station 100, and the wireless charging station 100 turns off the wireless transmitting module 102.

When charging of the self-moving device 200 is completed, and if the temperature detection device detects that a current temperature of the self-moving device 200 and/or the wireless charging station 100 exceeds the temperature threshold, the self-moving device 200 is controlled to dock at the wireless charging station 100. It may be understood that after the over-temperature protection action is performed, and if one or two of the temperatures are less than the temperature threshold, the self-moving device 200 is controlled to depart from the wireless charging station 100. As described in the foregoing embodiments, after the over-temperature protection action is performed, whether the temperature of the self-moving device 200 and/or the wireless charging station 100 falls below the temperature threshold may be alternatively not detected, and a docking time of the self-moving device 200 may be detected. When it is detected that the docking time meets a condition, the self-moving device 200 is controlled to depart.

Similarly, the temperature detection device may be alternatively disposed on the wireless charging station 100, and a specific implementation process is as described in the foregoing embodiments of describing the wireless charging station 100. Details are not described again.

In this embodiment, when the self-moving device 200 returns to the wireless charging station 100, and if the self-moving device 200 determines that the self-moving device cannot be docked with the wireless charging station 100 successfully, the self-moving device 200 sends the standby instruction to the wireless charging station 100, to control the wireless transmitting module 102 to stand by, and then the self-moving device 200 is controlled to stop. In this way, the energy of the wireless transmitting module 102 can be saved. The principle is the same as that described in the foregoing embodiments of describing the wireless charging station 100 and details are not described again.

Similarly, the self-moving device 200 and the wireless charging station 100 each also include a wireless communication module. The embodiment of the wireless communication module is the same as the foregoing embodiment of describing the wireless charging station 100, and details are not described again.

An embodiment of the present invention further provides an automatic working system, including the wireless charging station 100 and the self-moving device 200 described in the foregoing embodiments.

The present invention further provides another group of embodiments of a charging method, a charging protection method, and a charging energy-saving method for a self-moving device, a wireless charging station and system. For ease of description, the following embodiments are described starting from Embodiment 1.

### Embodiment 1

A method for charging a self-moving device according to this embodiment of the present invention is implemented by the wireless charging station according to the embodiment of the seventh aspect of the present invention and the wireless charging system according to the embodiment of the eighth aspect. The wireless charging station may be located inside and/or outside a working region of the self-moving device and on a boundary line of the working region. When the wireless charging station is located outside the working region, it is necessary to ensure that the self-moving device can move to a position on the wireless charging station.

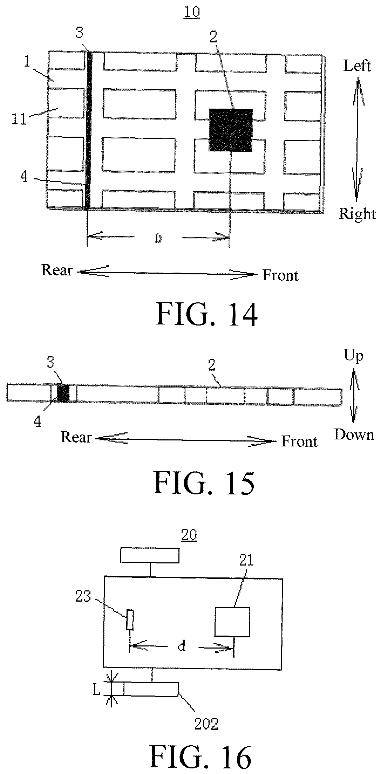

The following first describes a wireless charging station 10 and a wireless charging system in the method for charging a self-moving device in the present invention with reference to FIG. 14 to FIG. 22.

As shown in FIG. 14 to FIG. 22, the wireless charging station 10 in this embodiment of the present invention is described. The wireless charging station 10 is configured to charge a self-moving device 20, and the wireless charging station 10 includes a bottom plate 1 and only one resonant coil component, that is, only one resonant coil component is disposed in the wireless charging station 10. The bottom plate 1 may be provided with hollow holes 11. Because grass grows below the bottom plate 1, and the grass grows increasingly tall, the hollow holes 11 are passed through, that is, the grass may pass through the hollow holes 11, to facilitate the growth of the grass below the bottom plate 1.

In addition, the resonant coil component may be disposed in the bottom plate 1, and only one resonant coil component is disposed. In this way, the charging efficiency of a coil component can be effectively improved, and a structure of the wireless charging station 10 can be simpler, thereby simplifying the structure of the wireless charging station 10 and improving the aesthetics of the wireless charging station 10. Moreover, only one resonant coil component is disposed on the wireless charging station 10, which may simplify production steps, thereby improving the production efficiency of the wireless charging station 10 and reducing costs.

In some embodiments of the present invention, the hollow hole 11 may be set to be in the shape of a rectangle. It should be noted that, the rectangle may include a square and a rectangle. In this way, the shape of the hollow hole 11 can be more proper, and the structural consistency between the hollow holes 11 can be improved, so that the bottom plate 1 can be more aesthetic.

In some embodiments of the present invention, as shown in FIG. 14, FIG. 15, FIG. 17, and FIG. 19, the bottom plate 1 may be provided with a coil component mounting groove 2, and the resonant coil component may be mounted in the coil component mounting groove 2. A cross section of an opening of the coil component mounting groove 2 may be a square, and there is no design frame above the opening of the coil component mounting groove 2. During charging, such arrangement may facilitate wireless charging docking between the wireless charging station 10 and the self-moving device 20, and it is easy to disassemble and mount the resonant coil component.

In some embodiments of the present invention, an upper surface of the resonant coil component does not extend beyond an upper surface of the bottom plate 1. In this way, it can be ensured that the resonant coil component does not protrude from the upper surface of the bottom plate 1, and the self-moving device 20 may run on the bottom plate 1 more smoothly.

In some embodiments of the present invention, distances from the coil component mounting groove 2 to two sides of the bottom plate 1 in a width direction may be set to be the same. It should be noted that the width direction of the bottom plate 1 refers to a left-right direction in FIG. 14, FIG. 17, and FIG. 19. Such arrangement can make a disposition position of the coil component mounting groove 2 more proper, to improve the structural consistency between the left and right sides of the bottom plate 1, thereby making the bottom plate 1 more aesthetic.

In some embodiments of the present invention, as shown in FIG. 14, FIG. 15, FIG. 17, and FIG. 19, a distance from the coil component mounting groove 2 to a front edge of the bottom plate 1 is less than a distance from the coil component mounting groove 2 to a rear edge of the bottom plate 1. In this way, the disposition position of the coil component mounting groove 2 can be further optimized, thereby facilitating charging of the self-moving device 20.

In some embodiments of the present invention, the hollow holes 11 may be arranged on the bottom plate 1 in rows and in columns. In this way, disposition positions of the hollow holes 11 can be more regular, and a structural strength of the bottom plate 1 can be improved, thereby ensuring that the bottom plate 1 is not broken and improving the working reliability of the bottom plate 1. In addition, the hollow holes 11 avoid the coil component mounting groove 2. In this way, the hollow holes 11 and the coil component mounting groove 2 can be prevented from interfering with each other, thereby ensuring that the resonant coil component can be mounted in the coil component mounting groove 2.

As shown in FIG. 14 to FIG. 22, the wireless charging system according to this embodiment of the present invention includes the wireless charging station 10 and the self-moving device 20 described in the foregoing embodiments. The self-moving device 20 may be provided with a wireless charging receiving module 201. After it is determined that the self-moving device 20 needs to be charged, the self-moving device 20 moves to the wireless charging station 10, the wireless charging receiving module 201 is docked with the resonant coil component, and an electromagnetic signal transmitted by the resonant coil component of the wireless charging station 10 is received by using the wireless charging receiving module 201 to perform charging. In this way, charging work of the self-moving device 20 may be completed.

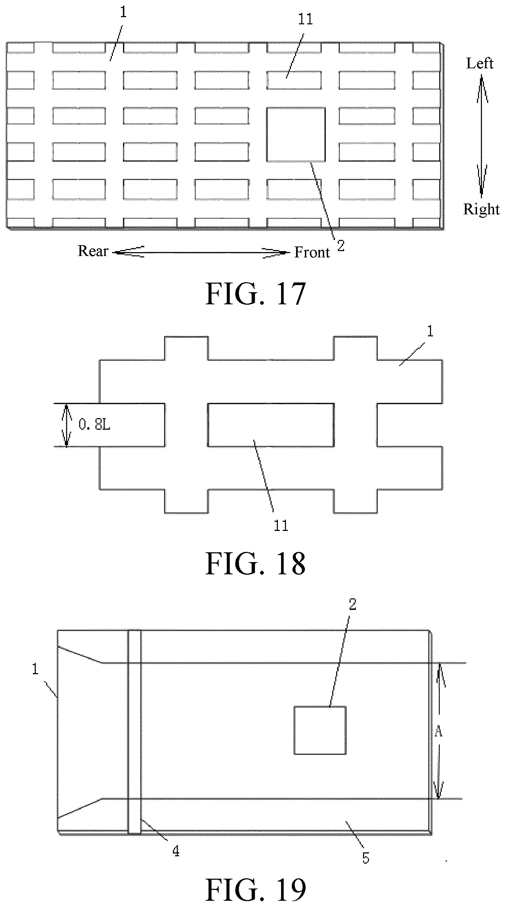

In some embodiments of the present invention, as shown in FIG. 16 and FIG. 18, the self-moving device 20 may include wheels 202, a width of the wheel 202 may be set to L, and a width of the hollow hole 11 may be less than 0.8 L. During docking for wireless charging, such arrangement may ensure that ground gripping teeth of the wheels 202 of the self-moving device 20 are not stuck in the hollow holes 11, so that the wheels 202 can move on the bottom plate 1 more smoothly, thereby ensuring that the wireless charging receiving module 201 can be docked with the resonant coil component.

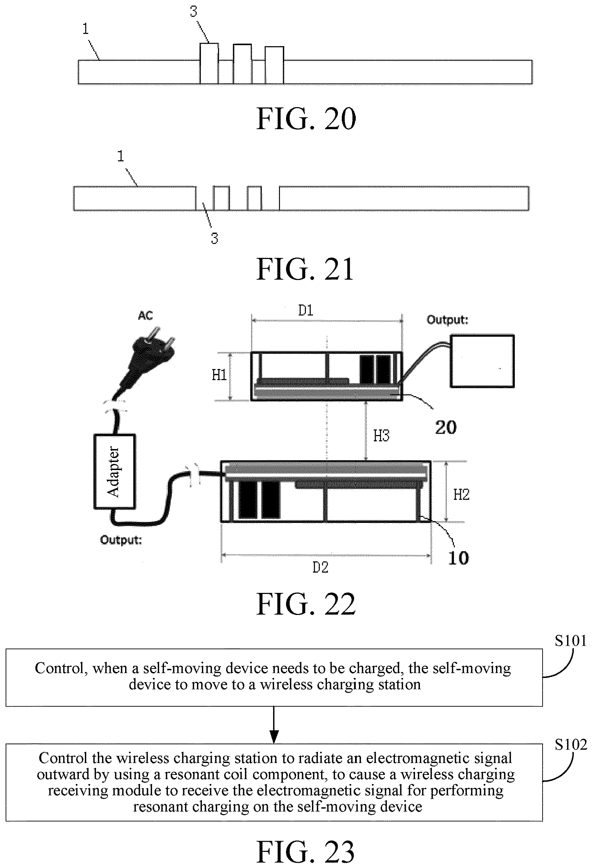

In some embodiments of the present invention, as shown in FIG. 22, a size of the wireless charging receiving module 21 may be 90 mm*90 mm*40 mm. As shown in the figure, a length and a width D1 of the wireless receiving module are 90 mm, and a height H1 is 40 mm. A size of a wireless charging transmitting module may be 130 mm*130 mm*40 mm. As shown in the figure, a length and a width D2 of the wireless transmitting module are 130 mm, and a height H2 is 40 mm. When the self-moving device 20 is charged by using the wireless charging receiving module 21, a vertical distance H3 between the wireless charging receiving module 21 and the coil component mounting groove 2 may be between 50 mm and 60 mm, and a horizontal deviation may be 2 cm. In this way, it may be ensured that a conversion power of the wireless charging system at a rated power reaches about 80%. In addition, for the compactness of the entire system, a charging management circuit of the self-moving device may be integrated in the wireless receiving module.

FIG. 23 is a flowchart of a method for charging a self-moving device according to an embodiment of the present invention. As shown in FIG. 23, the method for charging a self-moving device according to this embodiment of the present invention includes the following steps.

S 101. Control, when a self-moving device needs to be charged, the self-moving device to move to a wireless charging station.

A case that the self-moving device needs to be charged may include that an amount of power of the self-moving device is less than a preset threshold, the self-moving device receives a charging control signal, or the like.

5102. Control the wireless charging station to radiate an electromagnetic signal outward by using a resonant coil component, to cause a wireless charging receiving module to receive the electromagnetic signal for performing resonant charging on the self-moving device.

It should be noted that, electromagnetic resonant charging is a wireless charging technology. Specifically, a non-radiative magnetic field is generated around a transmitting coil component by using an alternating voltage loaded on the transmitting coil component, and a strong mutual coupling is generated between two resonant objects at the same frequency through interaction between non-radiative magnetic couplings. In this embodiment of the present invention, the resonant coil component includes a coil component and a control circuit. That is, the control circuit implements resonant charging of the self-moving device by controlling an alternating voltage loaded on the coil component.

That is, when a self-moving device needs to be charged, the self-moving device is first controlled to move to the wireless charging station, and then the wireless charging station is controlled to radiate an electromagnetic signal outward by using the resonant coil component. The self-moving device receives, by using the wireless charging receiving module, the electromagnetic signal for performing resonant charging on the self-moving device.

Therefore, the charging method according to this embodiment of the present invention is based on the wireless charging system, so that a self-moving device can receive, by using a wireless charging receiving module, an electromagnetic signal radiated outward by a resonant coil component of a wireless charging station, to perform resonant charging, thereby effectively improving the intelligence of the self-moving device. When the self-moving device needs to be charged, resonant charging can be performed by the wireless charging station, which effectively ensures the working continuity of the self-moving device without user intervention in charging, thereby avoiding a problem that the user forgets to charge the self-moving device and consequently the self-moving device fails to work. In addition, the wireless charging station adopts a hollow bottom plate without any protrusion, and only one resonant coil component is disposed in the wireless charging station, thereby effectively improving the aesthetics of the wireless charging station and improving the charging efficiency.

According to an embodiment of the present invention, the resonant coil component in the charging station is controlled to radiate the electromagnetic signal outward at a set resonance frequency.

Specifically, the set resonance frequency may be 6.78 MHz or 80 KHz to 400 KHz.

It should be noted that when the resonance frequency is 80 KHz to 400 KHz, the wireless charging station is controlled to perform metal object detection. When a metal object is detected, warning information is sent and/or the wireless charging module is controlled to stop radiating the electromagnetic signal outward.

Specifically, because 6.78 MHz is a lowest frequency in a free industrial scientific medical (ISM) frequency band, the frequency hardly generates heat to a metal foreign matter. However, frequencies of dozens of KHz to hundreds of KHz generate heat to the metal foreign matter, or generate an eddying effect to cause a temperature of the metal foreign matter to rise, even resulting in a hidden risk such as injury to people or fire. Therefore, metal foreign matter detection is required.

Specifically, when the self-moving device is charged by using the method for charging a self-moving device, a currently set resonance frequency of the wireless charging station is first detected. If the currently set resonance frequency of the wireless charging station is 6.78 MHz, the wireless charging receiving module of the self-moving device is controlled to receive an electromagnetic signal radiated outward by the resonant coil component of the wireless charging station, to perform resonant charging on the self-moving device. If the currently set resonance frequency of the wireless charging station is 80 KHz to 400 KHz, the wireless charging station is controlled to perform metal object detection. If a metal object is detected within a radiation range of the electromagnetic signal of the wireless charging station, warning information is sent and the electromagnetic signal is stopped from being radiated outward. If no metal object is detected within the radiation range of the electromagnetic signal of the wireless charging station, the wireless charging receiving module of the self-moving device is controlled to receive the electromagnetic signal radiated outward by the resonant coil component of the wireless charging station, to perform resonant charging on the self-moving device.

According to an embodiment of the present invention, the controlling the self-moving device to move to a wireless charging station includes: obtaining a current position of the self-moving device, guiding, according to the current position, the self-moving device to return to a coverage region of the wireless charging station, and controlling the self-moving device to continue to move in the coverage region, to cause a resonant coil component on the wireless charging station to be aligned with a wireless charging receiving module on the self-moving device.

It should be noted that, the wireless charging station radiates the electromagnetic signal outward by using the resonant coil component to charge the self-moving device. Therefore, based on a property of the electromagnetic signal, when a position of the resonant coil component in the wireless charging station is aligned with a position of the wireless charging receiving module in the self-moving device, the efficiency of charging, by the resonant coil component, the self-moving device is the highest. In this embodiment of the present invention, it is not necessary for the self-moving device to be completely aligned with the wireless charging receiving module, and there may be a deviation of 2 cm in the horizontal direction.

It should be understood that the wireless charging station 10 as shown in FIG. 14 to FIG. 22 further includes a device, configured to guide the self-moving device to return to the coverage region of the wireless charging station and cause the resonant coil component on the wireless charging station to be aligned with the wireless charging receiving module on the self-moving device. In an embodiment, the wireless charging station is connected to a boundary line, and a current is transmitted on the boundary line to form a magnetic signal. The self-moving device detects the magnetic signal to find the boundary line, and returns to the coverage region of the wireless charging station along the boundary line.

Specifically, the self-moving device 20 performs docking by detecting an in-place sensing member 3. When the wireless charging receiving module 201 is right above (± 2 cm) the in-place signal sensing member 3, a detection value of the self-moving device 20 is the largest. During design, when the detection value is greater than a set threshold, the self-moving device 20 brakes, and the docking precision is ensured at plus and minus 2 cm after braking.

The in-place signal sensing member 3 may be disposed on the bottom plate 1, and the self-moving device 20 determines, by sensing the in-place signal sensing member 3, that the self-moving device reaches a predetermined charging position on the bottom plate 1. In this way, the self-moving device 20 can reach the predetermined charging position more accurately, thereby improving the efficiency of charging the self-moving device 20 and improving the working performance of the wireless charging station 10.

In some embodiments of the present invention, as shown in FIG. 14 to FIG. 16, the in-place signal sensing member 3 may be set as a magnetic member, and the self-moving device 20 may be provided with an inductor 23 that magnetically induces the magnetic member. Through cooperation between the magnetic member and the inductor 23, the self-moving device 20 can better sense the in-place signal sensing member 3, and whether the self-moving device 20 reaches the predetermined charging position can be more accurately determined.

In some embodiments of the present invention, as shown in FIG. 14, FIG. 15, and FIG. 19, the magnetic member may be a magnetic strip, a magnetic strip mounting groove 4 may be provided on the bottom plate 1, and the magnetic strip is mounted in the magnetic strip mounting groove 4. The magnetic strip mounting groove 4 is embedded in the bottom plate 1, and a height of the magnetic strip mounting groove 4 is less than or equal to a height of the bottom plate 1. In this way, it may be ensured that there is no protrusion on an upper surface of the bottom plate 1, thereby ensuring that the self-moving device 20 moves on the bottom plate 1 smoothly.

In some embodiments of the present invention, an upper surface of the magnetic strip does not extend beyond the upper surface of the bottom plate 1. In this way, it may be further ensured that there is no protrusion on the upper surface of the bottom plate 1.

In some embodiments of the present invention, the magnetic strip mounting groove 4 extends in a width direction of the bottom plate 1, and the magnetic strip mounting groove 4 extends to two sides of the bottom plate 1 in the width direction. In this way, a disposition area of the magnetic strip mounting groove 4 can be enlarged, and a structure of the magnetic strip mounting groove 4 can be optimized.

In some embodiments of the present invention, an extending length of the magnetic strip is the same as that of the magnetic strip mounting groove 4. In this way, a disposition area of the magnetic strip can be enlarged, and whether the self-moving device 20 reaches the predetermined charging position may be determined more accurately.

In some embodiments of the present invention, as shown in FIG. 20 and FIG. 21, the in-place signal sensing member 3 is a protrusion or a groove constructed on the upper surface of the bottom plate 1. In this way, a fluctuating section may be formed on the bottom plate 1, and the self-moving device 20 determines, by detecting a current parameter change of the self-moving device when passing through the fluctuating section, that the self-moving device reaches the predetermined charging position.

As shown in FIG. 20, if the in-place signal sensing member 3 is the protrusion, and when the self-moving device 20 passes through the protrusion, the self-moving device 20 detects a movement current of a motor, and when a current change trend meets a protrusion state, the self-moving device 20 has reached the predetermined charging position by default.

As shown in FIG. 21, if the in-place signal sensing member 3 is the groove, and when the self-moving device 20 passes through the groove, the self-moving device 20 detects a movement current of the motor, and when a current change trend meets a concavity state, the self-moving device 20 has reached the predetermined charging position by default.

In some embodiments of the present invention, the in-place signal sensing member 3 extends in the width direction of the bottom plate 1, that is, the in-place signal sensing member 3 extends in a left-right direction of the bottom plate 1. There may be a plurality of in-place signal sensing members 3, and the plurality of in-place signal sensing members 3 are disposed at intervals in a length direction of the bottom plate 1. It should be noted that, a quantity of the in-place signal sensing members 3 is greater than two. The length direction of the bottom plate 1 refers to a front-rear direction of the bottom plate 1 in FIG. 20. In this way, whether the self-moving device 20 reaches the predetermined charging position may be determined more accurately.

In some embodiments of the present invention, the in-place signal sensing member 3 may be in at least one of a rectangle, a trapezoid, an inverted trapezoid, a U shape, and an inverted U shape, or may be in another shape having the same function as that of the rectangle, the trapezoid, the inverted trapezoid, the U shape, or the inverted U shape. In this way, a shape of the in-place signal sensing member 3 can be more proper. When the self-moving device 20 passes through the in-place signal sensing member 3, the self-moving device 20 detects a current parameter change amount such as a movement current of the motor more accurately.

In some embodiments of the present invention, the in-place signal sensing member 3 is located on a rear side of the resonant coil component. In this way, the in-place signal sensing member 3 can be separated from the resonant coil component, and the in-place signal sensing member 3 and the resonant coil component can be prevented from interfering with each other, thereby ensuring the normal work of the in-place signal sensing member 3 and the resonant coil component. It should be understood that the in-place sensing member 3 may be alternatively disposed on a front side of the coil component, and may be placed vertically or horizontally, and there may be one or more in-place signal sensing members.

In some embodiments of the present invention, guide rails 5 may be disposed on the bottom plate 1, and the self-moving device 20 may move on the guide rails 5. The guide rails 5 are disposed, making the accurate docking of the self-moving device 20 more convenient. In addition, to ensure that the wheels 202 of the self-moving device 20 enter the guide rails 5 normally, edge distances of two guide rails 5 should match wheel distances of the self-moving device 20, to ensure smooth entrance/exit of the self-moving device 20, and play a role in improving the precision of the docking. In addition, as shown in FIG. 19, an outer edge distance A of the guide rails 5 should match a maximum wheel distance and should be greater than a distance between two wheels 202 of the self-moving device 20 and less than the distance between the two wheels 202 of the self-moving device 20 plus 2 cm.

The wireless charging system according to this embodiment of the present invention includes: the wireless charging station 10 and the self-moving device 20 in the foregoing embodiments, and the self-moving device 20 may be provided with a wireless charging receiving module 201. When needing to be charged, the self-moving device 20 moves to the bottom plate 1, the wireless charging receiving module 201 is opposite to the resonant coil component to perform resonant charging, and finally, charging work of the self-moving device 20 is completed.

In some embodiments of the present invention, as shown in FIG. 14 and FIG. 16, the wireless charging station 10 may be the wireless charging station 10 in the foregoing embodiments, a distance between the resonant coil component and a magnetic member is D, and a distance between the wireless charging receiving module of the self-moving device 20 and the inductor 23 is d, where D is between 0.95 times d and 1.05 times d. In this way, a value of the distance between the resonant coil component and the magnetic member may be optimized, and a value of the distance between the wireless charging receiving module and the inductor 23 may be also optimized.

In some embodiments of the present invention, the wireless charging station 10 may be the wireless charging station 10 in the foregoing embodiments. When the in-place signal sensing member 3 is the protrusion, a height of the in-place signal sensing member 3 is greater than 1/10 of a radius of the wheel 202 and less than 1/2 of the radius of the wheel. When the self-moving device 20 passes through the protrusion, the self-moving device 20 detects a current parameter change amount such as a movement current of the motor, and when a current change trend meets a protrusion state, the self-moving device 20 has reached the predetermined charging position by default.

In some embodiments of the present invention, when the in-place signal sensing member 3 is the groove, a height of the in-place signal sensing member 3 is greater than 1/10 of the radius of the wheel 202 and less than a thickness of the bottom plate 1. In this way, the wheels 202 can be prevented from falling into the bottom plate 1, thereby ensuring that the self-moving device 20 moves on the bottom plate 1 normally.

That is, when the self-moving device needs to be charged, a current position of the self-moving device may begin to be obtained, and then the self-moving device is guided according to the current position to return to a coverage region of the wireless charging station. The coverage region should be a horizontal area of the wireless charging station. Subsequently, whether the wireless charging receiving module on the self-moving device is aligned with the resonant coil component on the wireless charging station is determined. The alignment may be approximate alignment or alignment within a fixed deviation, and the left-right deviation may be 2 cm. If the wireless charging receiving module on the self-moving device is not aligned with the resonant coil component on the wireless charging station, the self-moving device is controlled to continue to move in the coverage region until the wireless charging receiving module on the self-moving device is aligned with the resonant coil component on the wireless charging station. If the wireless charging receiving module on the self-moving device has been aligned with the resonant coil component on the wireless charging station, the self-moving device is controlled to brake for charging.

In another aspect, when the wireless charging station is disposed on a boundary line of a to-be-cut region, the self-moving device may return to the coverage region of the wireless charging station along the boundary line, to enable the wireless charging station to perform resonant charging on the self-moving device. The self-moving device may perform an operation of finding the boundary line after receiving a charging control signal, to further return to the coverage region of the wireless charging station.

Specifically, the self-moving device is controlled to find a boundary line and return to the coverage region of the wireless charging station along the boundary line, and the self-moving device is controlled to continue to move in the coverage region, to cause the resonant coil component on the wireless charging station to be aligned with the wireless charging receiving module on the self-moving device. A process of controlling the self-moving device to move to cause the wireless charging receiving module on the self-moving device to be aligned with the resonant coil component on the wireless charging station is the same as the foregoing process, and a difference between the two processes lies in that it is determined by using the charging control signal that the self-moving device needs to be charged in this embodiment. The charging control signal may be inputted by the user, that is, the user may send a charging control signal to the self-moving device, so that the self-moving device is in a state in which the self-moving device needs to be charged.

That is, when the self-moving device needs to be charged, two-layer progressive position adjustment may be performed on the self-moving device, that is, the first layer may be coarse adjustment. The self-moving device may be controlled to reach the coverage of the wireless charging station according to preset position information of the wireless charging station or a received charging control signal. The second layer may be fine adjustment, that is, the self-moving device is guided by using the in-place signal sensing member to reach a specific predetermined charging position, so that the wireless charging receiving module on the self-moving device can be aligned with the resonant coil component on the wireless charging station, to perform resonant charging on the self-moving device.

According to an embodiment of the present invention, the method for charging a self-moving device further includes: in a process of charging the self-moving device, detecting a current temperature of the wireless charging station and/or the self-moving device, and controlling, if the current temperature exceeds a preset threshold, the wireless charging station to stop charging the self-moving device continuously.

Specifically, in a process of charging the self-moving device, current temperatures of the wireless charging station and the self-moving device are respectively detected, and then the current temperatures of the wireless charging station and the self-moving device are respectively determined, that is, whether the current temperature of the wireless charging station exceeds a preset temperature threshold of the wireless charging station is determined. If the current temperature of the wireless charging station exceeds the preset temperature threshold of the wireless charging station, the wireless charging station is controlled to stop charging the self-moving device continuously, and if the current temperature of the wireless charging station does not exceed the preset temperature threshold of the wireless charging station, the wireless charging station is controlled to continue to charge the self-moving device. In addition, whether the current temperature of the self-moving device exceeds a preset temperature threshold of the self-moving device is further determined. If the current temperature of the self-moving device exceeds the preset temperature threshold of the self-moving device, the wireless charging station is controlled to stop charging the self-moving device continuously, and if the current temperature of the self-moving device does not exceed the preset temperature threshold of the self-moving device, the wireless charging station is controlled to continue to charge the self-moving device.

That is, when the self-moving device is charged, the current temperature of either of the wireless charging station and the self-moving device exceeds a preset threshold, an operation of controlling the wireless charging station to stop charging the self-moving device continuously is triggered, and there is no need to perform an operation of stopping charging only when the current temperatures of the wireless charging station and the self-moving device exceed the preset threshold, thereby effectively avoiding safety hazard caused by continuous charging at a high temperature and a problem of shortening the service life of an electronic element.

It should be understood that a temperature detection device may be disposed in the wireless charging station and the self-moving device, so that when the wireless charging station charges the self-moving device, temperatures of the self-moving device and the wireless charging station are detected in real time. The preset threshold (including the preset temperature threshold of the wireless charging station and the preset temperature threshold of the self-moving device) may be 50°C.

Further, after it is detected that the current temperature of the wireless charging station and/or the self-moving device exceeds the preset threshold, the self-moving device is further controlled to remain stationary, and a current temperature of the wireless charging station and/or the self-moving device is continuously detected. When the current temperature of the wireless charging station and/or the self-moving device is less than the preset threshold, the self-moving device may be controlled to start walking again.

Therefore, according to the charging protection method provided in this embodiment of the present invention, by adding an over-temperature protection mechanism, the security of a charging process can be effectively improved, thereby improving user experience.

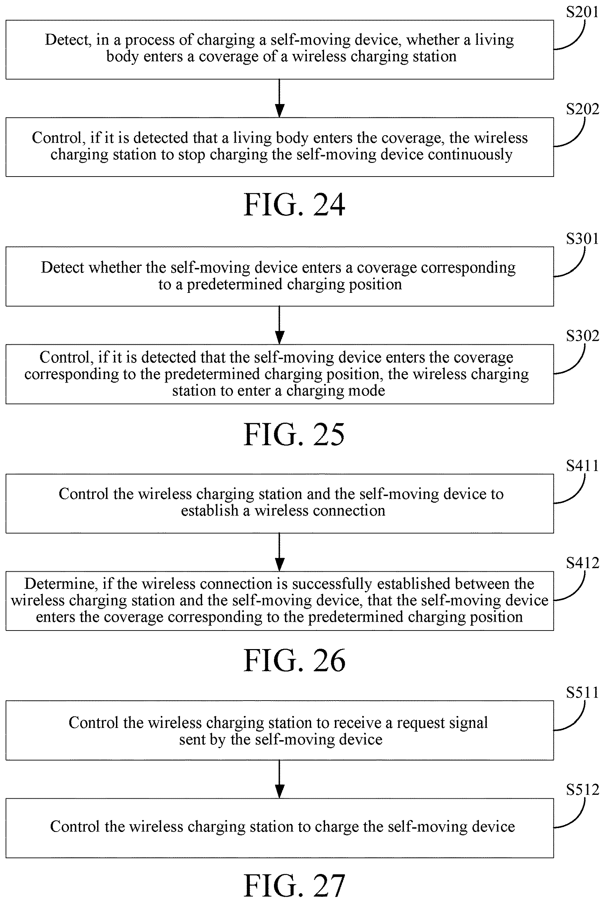

According to an embodiment of the present invention, as shown in FIG. 24, the method for charging a self-moving device further includes the following steps.

S201. Detect, in a process of charging a self-moving device, whether a living body enters a coverage of a wireless charging station.

The living body includes a living thing such as people or animals that can move. Specifically, at least one human body sensor may be disposed on the wireless charging station to detect whether a living body enters a coverage of the wireless charging station. At least one human body sensor may be alternatively disposed on the self-moving device, and the human body sensor may be a pyroelectric infrared sensor and/or a microwave sensor, or the like.

S202. Control, if it is detected that a living body enters the coverage, the wireless charging station to stop charging the self-moving device continuously.

That is, when the self-moving device is charged, to reduce or avoid adverse impact of electromagnetic radiation on people or animals, whether a living body enters a coverage of the wireless charging station should be detected in the charging process, that is, whether people or animals enter the coverage of the wireless charging station is detected. If it is detected that a living body enters the coverage, the wireless charging station is controlled to stop charging the self-moving device continuously, and if it is detected that no living body enters the coverage, the wireless charging station is controlled to continue to charge the self-moving device.

Further, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

That is, after the charging process is stopped because there is a living body in the coverage, to ensure a charging effect of the self-moving device, whether there is a living body in the coverage should still continue to be detected after the self-moving device is stopped from being continuously charged, and after the living body leaves the coverage, the wireless charging station is controlled to charge the self-moving device again. In other words, when the living body appears in the coverage, the charging process is stopped, and after the living body leaves the coverage, the charging process continues, so that it is ensured that a battery of the self-moving device can be fully charged in the charging process, and a case that the charging process is stopped due to presence of the living body in the coverage, resulting in an insufficient amount of power of the self-moving device when working again is avoided.

According to an embodiment of the present invention, as shown in FIG. 25, before the controlling the wireless charging station to radiate an electromagnetic signal outward by using the resonant coil component, the method further includes the following steps.

S301. Detect whether the self-moving device enters a coverage corresponding to a predetermined charging position.

According to an embodiment of the present invention, as shown in FIG. 26, the detecting whether the self-moving device enters a coverage corresponding to a predetermined charging position includes:
S411. Control the wireless charging station and the self-moving device to establish a wireless connection.
S412. Determine, if the wireless connection is successfully established between the wireless charging station and the self-moving device, that the self-moving device enters the coverage corresponding to the predetermined charging position.

That is, when whether the self-moving device enters a coverage corresponding to a predetermined charging position is detected, the wireless charging station is controlled to continuously establish a wireless connection with the self-moving device, and whether the wireless connection is successfully established between the wireless charging station and the self-moving device is determined. If the wireless connection is successfully established between the wireless charging station and the self-moving device, it is determined that the self-moving device enters the coverage corresponding to the predetermined charging position, and if the wireless connection fails to be established between the wireless charging station and the self-moving device, it is determined that the self-moving device has not entered the coverage corresponding to the predetermined charging position, and the wireless charging station is controlled to continue to establish the wireless connection with the self-moving device.

It should be noted that, in this embodiment of the present invention, the wireless connection may be established between the wireless charging station and the self-moving device by using a wireless communication component. A group of wireless communication components that are paired and bound are disposed on the wireless charging station and the self-moving device. The wireless communication component disposed on the self-moving device is powered by a battery on the self-moving device, so that the wireless communication component can receive a wireless connection signal once every first preset time. The wireless communication component disposed on the wireless charging station is powered by a power supply for supplying power to the wireless charging station, so that the wireless communication component can send a wireless connection signal once every second preset time. The wireless communication component may be a Bluetooth module. Due to an intrinsic property of the Bluetooth component, a connection can be established successfully only when two wireless communication components that are paired are in a preset distance range. Therefore, whether the self-moving device enters the coverage corresponding to the predetermined charging position may be determined by determining whether the wireless communication components establish a connection successfully. The first preset time may be 0 seconds to 10 seconds, that is, the self-moving device may continuously receive the wireless connection signal. The second preset time may be also 0 seconds to 10 seconds, and the wireless communication components may establish the connection within a distance range of five meters.

Specifically, in this embodiment of the present invention, the wireless communication component disposed on the self-moving device may receive a connection signal once every first preset time, and the wireless communication component disposed on the wireless charging station may send a connection signal once every second preset time. When the wireless communication component disposed on the self-moving device receives the signal from the wireless communication component disposed on the wireless charging station, the wireless connection is successfully established between the self-moving device and the wireless charging station. In this case, it is determined that the self-moving device enters the coverage corresponding to the predetermined charging position.

Further, before the determining whether the self-moving device enters the coverage corresponding to the predetermined charging position, the method further includes: controlling, if the wireless connection is successfully established between the wireless charging station and the self-moving device, the wireless charging station to detect a signal strength of the wireless connection, and determining, if the signal strength of the wireless connection reaches a preset signal strength, that the self-moving device enters the coverage corresponding to the charging position.

It should be noted that, the coverage corresponding to the predetermined charging position should be greater than the predetermined charging position. For example, the coverage corresponding to the predetermined charging position may be a coverage corresponding to the wireless charging station, and the predetermined charging position may be a coverage corresponding to the resonant coil component. Therefore, when it is detected that the wireless connection is successfully established between the wireless charging station and the self-moving device, it may be determined that the self-moving device enters the coverage corresponding to the predetermined charging position. In this embodiment of the present invention, the signal strength of the wireless connection may be set to be related to a distance between two ends of the wireless connection. Therefore, when the self-moving device is located at an edge of the coverage, the signal strength of the wireless connection is relatively small, while when the self-moving device enters the predetermined charging position, the signal strength of the wireless connection is relatively large. Therefore, after the wireless connection is successfully established between the wireless charging station and the self-moving device, the signal strength of the wireless connection may be further detected, to determine whether the self-moving device enters the coverage corresponding to the predetermined charging position.

Specifically, when whether the self-moving device enters the coverage corresponding to the predetermined charging position is detected, the wireless charging station is controlled to continuously establish the wireless connection with the self-moving device, and whether the wireless connection is successfully established between the wireless charging station and the self-moving device is determined. If the wireless connection is successfully established between the wireless charging station and the self-moving device, the wireless charging station is further controlled to detect a signal strength of the wireless connection, and whether the signal strength of the wireless connection reaches a preset signal strength is determined. If the signal strength of the wireless connection reaches the preset signal strength, it is determined that the self-moving device enters the predetermined charging position, and if the signal strength of the wireless connection has not reached the preset signal strength, it is determined that the self-moving device has not entered the predetermined charging position.

Therefore, in this embodiment of the present invention, whether the self-moving device successfully enters the coverage corresponding to the predetermined charging position may be determined by determining whether the wireless communication components successfully establish a connection, and whether the self-moving device enters the predetermined charging position is further determined by detecting the signal strength of the wireless connection. When the self-moving device reaches the predetermined charging position, the wireless charging station is controlled to start a resonant coil of the wireless charging station to perform resonant charging on the self-moving device.

Further, the method further includes: after the wireless connection is successfully established or the signal strength of the wireless connection reaches a predetermined strength, controlling the self-moving device to decelerate; and before the determining that the self-moving device enters the predetermined charging position, controlling the wireless charging station to start a resonant coil component of the wireless charging station.

That is, after the wireless connection is successfully established between the wireless charging station and the self-moving device, it may be determined that the self-moving device enters the coverage corresponding to the predetermined charging position. In this case, the self-moving device is controlled to decelerate, so that the self-moving device continues to move to the predetermined charging position slowly. The self-moving device can be controlled to perform accurate displacement by controlling deceleration of the self-moving device, to ensure that the self-moving device can move to the predetermined charging position. In addition, when the signal strength of the wireless connection reaches the predetermined strength, it may be determined that a distance between the self-moving device and the wireless charging station is sufficiently small. In this case, the wireless charging station may be controlled to start the resonant coil component of the wireless charging station, to perform resonant charging on the self-moving device.

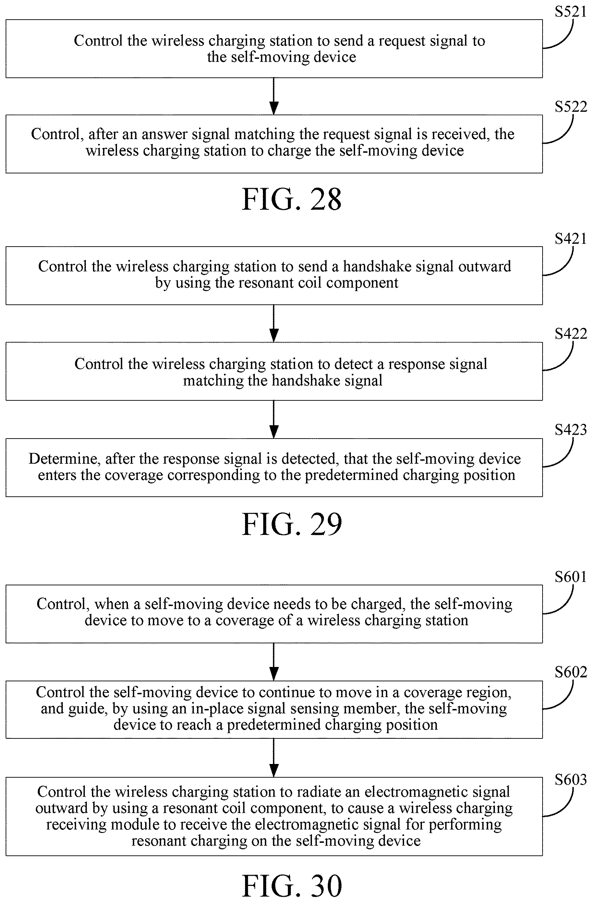

According to another embodiment of the present invention, as shown in FIG. 29, the detecting whether the self-moving device enters a coverage corresponding to a predetermined charging position includes:
S421. Control the wireless charging station to send a low-frequency handshake signal outward by using the resonant coil component.
S422. Control the wireless charging station to detect a response signal matching the low-frequency handshake signal.
S423. Determine, after the response signal is detected, that the self-moving device enters the coverage corresponding to the predetermined charging position.

Specifically, the wireless charging station may send a handshake signal outward by using the resonant coil component. When the resonant coil component on the wireless charging station is aligned with the wireless charging receiving module on the self-moving device, the wireless charging station may detect a response signal matching the handshake signal, and after the wireless charging station detects the response signal,

For example, the wireless charging station and the self-moving device are respectively provided with successfully matched Bluetooth docking devices, that is, the Bluetooth docking devices disposed on the wireless charging station and the self-moving device can perform a Bluetooth connection. In this embodiment of the present invention, the Bluetooth docking devices may be successfully connected within a range of five meters. When the self-moving device needs to be charged, the wireless charging station obtains current position information of the self-moving device and guides the self-moving device to return to a coverage region of the wireless charging station. During returning of the self-moving device, a wireless connection signal may be sent outward by the wireless charging station/the self-moving device. After the self-moving device/the wireless charging station receives the wireless connection signal, the wireless connection is successfully established between the wireless charging station and the self-moving device. In this case, it may be determined that the self-moving device enters the coverage corresponding to the predetermined charging position.

To further determine that the self-moving device has entered the coverage corresponding to the predetermined charging position, the signal strength of the wireless connection between the wireless charging station and the self-moving device may be further determined. When the signal strength of the wireless connection reaches the preset signal strength, it is determined that the self-moving device enters the coverage corresponding to the predetermined charging position.

After it is determined, by using the wireless connection or the signal strength of the wireless connection, that the self-moving device enters the coverage corresponding to the predetermined charging position, the self-moving device may be further controlled to move at a lower speed to improve the accuracy of the movement of the self-moving device and ensure that the self-moving device can accurately move to the predetermined charging position, and the wireless charging station is controlled to start the resonant coil component of the wireless charging station, to prepare to enter a charging mode.

Subsequently, to verify that the self-moving device has entered the coverage corresponding to the predetermined charging position, the resonant coil component and the self-moving device are further controlled to communicate with each other by using the low-frequency handshake signal and the response signal matching the low-frequency handshake signal, so that the accuracy of determining that the self-moving device enters the coverage corresponding to the predetermined charging position is improved by adding a detection manner.

It should be understood that one or more of the foregoing three manners in which it is detected that the wireless connection is successfully established, the signal strength of the wireless connection is detected, and the low-frequency handshake signal and the response signal matching the low-frequency handshake signal are detected may be adopted during specific implementation. For example, when a distance for establishing the wireless connection is set to be relatively small, whether the self-moving device enters the coverage corresponding to the predetermined charging position may be determined by detecting whether the wireless connection is successfully established. When a distance for establishing the wireless connection is set to be relatively large, and after it is detected that the wireless connection is successfully established, the signal strength of the wireless connection may be further detected, to determine whether the self-moving device enters the predetermined charging position. To improve the accuracy of the detection, a manner of detecting a low-frequency handshake signal may be further added after it is detected that the wireless connection is successfully established and/or the signal strength of the wireless connection is detected, to further determine that the self-moving device enters the coverage corresponding to the predetermined charging position. That is, after it is detected that the wireless connection is successfully established and a response signal matching the low-frequency handshake signal is detected, it is determined that the self-moving device enters the coverage corresponding to the predetermined charging position, or after it is detected that the signal strength of the wireless connection reaches the preset signal strength and a response signal matching the low-frequency handshake signal is detected, it is determined that the self-moving device enters the coverage corresponding to the predetermined charging position.

S302. Control, if it is detected that the self-moving device enters the coverage corresponding to the predetermined charging position, the wireless charging station to enter a charging mode.

That is, when the self-moving device needs to be charged, the self-moving device is controlled to move to the wireless charging station, and then, whether the self-moving device enters the coverage corresponding to the predetermined charging position is determined by using a wireless connection relationship between the self-moving device and the wireless charging station, and when it is detected that the self-moving device enters the coverage corresponding to the predetermined charging position, the wireless charging station is controlled to enter a charging mode. In this case, the self-moving device may be further controlled to move at a lower speed until the self-moving device moves to the predetermined charging position, to improve the resonant charging efficiency.

It should be noted that, in the charging mode, the wireless charging station performs resonant charging on the self-moving device. At the beginning of the charging mode, the wireless charging station may be controlled to start the resonant coil component, and a charging parameter such as a voltage or a current is selected according to a current amount of power of the self-moving device.

Further, as shown in FIG. 27, after the controlling the wireless charging station to enter a charging mode, the method further includes the following steps.

S511. Control the wireless charging station to receive a request signal sent by the self-moving device.

S512. Control the wireless charging station to charge the self-moving device.

That is, after a connection is successfully established between the wireless charging station and the self-moving device, the wireless charging station may be controlled to receive a request signal sent by the self-moving device. It should be understood that, in this case, the self-moving device should have sent the request signal, so that the wireless charging station receives the request signal. That is, after the connection is successfully established between the wireless charging station and the self-moving device, the self-moving device is first controlled to send the request signal to the wireless charging station, and then the wireless charging station is controlled to receive the request signal sent by the self-moving device; and after the wireless charging station receives the request signal, the wireless charging station is controlled to perform resonant charging on the self-moving device.

Alternatively, as shown in FIG. 28,
S521. Control the wireless charging station to send a request signal to the self-moving device.
S522. Control, after an answer signal matching the request signal is received, the wireless charging station to charge the self-moving device.

That is, after a connection is successfully established between the wireless charging station and the self-moving device, the wireless charging station may be controlled to send a request signal to the self-moving device. It should be understood that, in this case, the self-moving device has not sent the request signal to the wireless charging station, but has passively received the request signal sent by the wireless charging station to the self-moving device. That is, after the connection is successfully established between the wireless charging station and the self-moving device, the wireless charging station is first controlled to send the request signal to the self-moving device, and then after receiving the request signal, the self-moving device sends, according to the request signal, an answer signal matching the request signal to the wireless charging station. The wireless charging station receives the answer signal sent by the self-moving device, and after the answer signal matching the request signal is received, the wireless charging station is controlled to perform resonant charging on the self-moving device.

Specifically, a difference between the two embodiments shown in FIG. 27 and FIG. 28 lies in that after the wireless connection is successfully established between the wireless charging station and the self-moving device, in the embodiment in FIG. 27, the self-moving device actively sends the request signal, but in the embodiment in FIG. 28, the self-moving device passively receives the request signal sent by the wireless charging station.

Further, during charging, whether charging of the self-moving device is completed is detected, and if the charging has been completed, the wireless charging station is controlled to enter, from the charging mode, a low-power consumption mode.

The low-power consumption mode is a mode in which the wireless charging station only ensures a wireless communication function.

That is, after the self-moving device moves to a charging position (the resonant coil component on the wireless charging station is aligned with the wireless charging receiving module on the self-moving device), the wireless charging station is enable to charge the self-moving device. During charging, whether charging of the self-moving device is completed is detected in real time; and if the charging is not completed, the charging continues, and if the charging is completed, the wireless charging station is controlled to enter, from the charging mode, a low-power consumption mode, to enable the wireless communication function to wait for the self-moving device to establish a communication connection.

Based on the foregoing, according to the method for charging a self-moving device provided in this embodiment of the present invention, when a self-moving device needs to be charged, the self-moving device is controlled to move to a wireless charging station, and then the wireless charging station is controlled to radiate an electromagnetic signal outward by using a resonant coil component, to cause a wireless charging module to receive the electromagnetic signal for performing resonant charging on the self-moving device. Therefore, according to the charging method provided in this embodiment of the present invention, the wireless charging station is controlled to perform resonant charging on the self-moving device. In terms of structure, through cooperation between a hollow bottom plate and only one resonant coil component, a structure of the wireless charging station can be simplified, to cause the structure of the wireless charging station to be simpler, thereby improving the aesthetics of the wireless charging station. In terms of performance, in the case of ensuring a charging effect, energy is saved in a manner in which only one resonant coil component is disposed on the wireless charging station.

### Embodiment 2

A method for charging a self-moving device according to this embodiment of the present invention is implemented by the wireless charging station according to the embodiment of the ninth aspect of the present invention and the wireless charging system according to the embodiment of the tenth aspect.

The following first describes a wireless charging station 10 and a wireless charging system in the method for charging a self-moving device in the present invention with reference to FIG. 14 to FIG. 21.

The in-place signal sensing member 3 may be disposed on the bottom plate 1, and the self-moving device 20 determines, by sensing the in-place signal sensing member 3, that the self-moving device reaches a predetermined charging position on the bottom plate 1. In this way, the self-moving device 20 can reach the predetermined charging position more accurately, thereby improving the efficiency of charging the self-moving device 20 and improving the working performance of the wireless charging station 10.

In some embodiments of the present invention, as shown in FIG. 14 to FIG. 16, the in-place signal sensing member 3 may be set as a magnetic member, and the self-moving device 20 may be provided with an inductor 23 that magnetically induces the magnetic member. Through cooperation between the magnetic member and the inductor 23, the self-moving device 20 can better sense the in-place signal sensing member 3, and whether the self-moving device 20 reaches the predetermined charging position can be more accurately determined.

In some embodiments of the present invention, as shown in FIG. 14, FIG. 15, and FIG. 19, the magnetic member may be a magnetic strip, a magnetic strip mounting groove 4 may be provided on the bottom plate 1, and the magnetic strip is mounted in the magnetic strip mounting groove 4. The magnetic strip mounting groove 4 is embedded in the bottom plate 1, and a height of the magnetic strip mounting groove 4 is less than or equal to a height of the bottom plate 1. In this way, it may be ensured that there is no protrusion on an upper surface of the bottom plate 1, thereby ensuring that the self-moving device 20 moves on the bottom plate 1 smoothly.

In some embodiments of the present invention, an upper surface of the magnetic strip does not extend beyond the upper surface of the bottom plate 1. In this way, it may be further ensured that there is no protrusion on the upper surface of the bottom plate 1.

In some embodiments of the present invention, the magnetic strip mounting groove 4 extends in a width direction of the bottom plate 1, and the magnetic strip mounting groove 4 extends to two sides of the bottom plate 1 in the width direction. In this way, a disposition area of the magnetic strip mounting groove 4 can be enlarged, and a structure of the magnetic strip mounting groove 4 can be optimized.

In some embodiments of the present invention, an extending length of the magnetic strip is the same as that of the magnetic strip mounting groove 4. In this way, a disposition area of the magnetic strip can be enlarged, and whether the self-moving device 20 reaches the predetermined charging position may be determined more accurately.

In some embodiments of the present invention, as shown in FIG. 20 and FIG. 21, the in-place signal sensing member 3 is a protrusion or a groove constructed on the upper surface of the bottom plate 1. In this way, a fluctuating section may be formed on the bottom plate 1, and the self-moving device 20 determines, by detecting a current parameter change of the self-moving device when passing through the fluctuating section, that the self-moving device reaches the predetermined charging position.

As shown in FIG. 20, if the in-place signal sensing member 3 is the protrusion, and when the self-moving device 20 passes through the protrusion, the self-moving device 20 detects a movement current of a motor, and when a current change trend meets a protrusion state, the self-moving device 20 has reached the predetermined charging position by default.

As shown in FIG. 21, if the in-place signal sensing member 3 is the groove, and when the self-moving device 20 passes through the groove, the self-moving device 20 detects a movement current of the motor, and when a current change trend meets a concavity state, the self-moving device 20 has reached the predetermined charging position by default.

In some embodiments of the present invention, the in-place signal sensing member 3 extends in the width direction of the bottom plate 1, that is, the in-place signal sensing member 3 extends in a left-right direction of the bottom plate 1. There may be a plurality of in-place signal sensing members 3, and the plurality of in-place signal sensing members 3 are disposed at intervals in a length direction of the bottom plate 1. It should be noted that, a quantity of the in-place signal sensing members 3 is greater than two. The length direction of the bottom plate 1 refers to a front-rear direction of the bottom plate 1 in FIG. 20. In this way, whether the self-moving device 20 reaches the predetermined charging position may be determined more accurately.

In some embodiments of the present invention, the in-place signal sensing member 3 may be in at least one of a rectangle, a trapezoid, an inverted trapezoid, a U shape, and an inverted U shape, or may be in another shape having the same function as that of the rectangle, the trapezoid, the inverted trapezoid, the U shape, or the inverted U shape. In this way, a shape of the in-place signal sensing member 3 can be more proper. When the self-moving device 20 passes through the in-place signal sensing member 3, the self-moving device 20 detects a movement current of the motor more accurately.

In some embodiments of the present invention, the in-place signal sensing member 3 is located on a rear side of the resonant coil component. In this way, the in-place signal sensing member 3 can be separated from the resonant coil component, and the in-place signal sensing member 3 and the resonant coil component can be prevented from interfering with each other, thereby ensuring the normal work of the in-place signal sensing member 3 and the resonant coil component. It should be understood that the in-place sensing member 3 may be alternatively disposed on a front side of the coil component, and may be placed vertically or horizontally, and there may be one or more in-place signal sensing members.

In some embodiments of the present invention, guide rails 5 may be disposed on the bottom plate 1, and the self-moving device 20 may move on the guide rails 5. The guide rails 5 are disposed, making the accurate docking of the self-moving device 20 more convenient. In addition, to ensure that the wheels 202 of the self-moving device 20 enter the guide rails 5 normally, edge distances of two guide rails 5 should match wheel distances of the self-moving device 20, to ensure smooth entrance/exit of the self-moving device 20, and play a role in improving the precision of the docking. In addition, as shown in FIG. 19, an outer edge distance A of the guide rails 5 should match a maximum wheel distance and should be greater than a distance between two wheels 202 of the self-moving device 20 and less than the distance between the two wheels 202 of the self-moving device 20 plus 2 cm.

The wireless charging system according to this embodiment of the present invention includes: the wireless charging station 10 and the self-moving device 20 in the foregoing embodiments, and the self-moving device 20 may be provided with a wireless charging receiving module 21. When needing to be charged, the self-moving device 20 moves to the bottom plate 1, the wireless charging receiving module 21 is opposite to the resonant coil component to perform charging, and finally, charging work of the self-moving device 20 is completed.

In some embodiments of the present invention, as shown in FIG. 14 and FIG. 16, the wireless charging station 10 may be the wireless charging station 10 in the foregoing embodiments, a distance between the resonant coil component and a magnetic member is D, and a distance between the wireless charging receiving module of the self-moving device 20 and the inductor 23 is d, where D is between 0.95 times d and 1.05 times d. In this way, a value of the distance between the resonant coil component and the magnetic member may be optimized, and a value of the distance between the wireless charging receiving module and the inductor 23 may be also optimized.

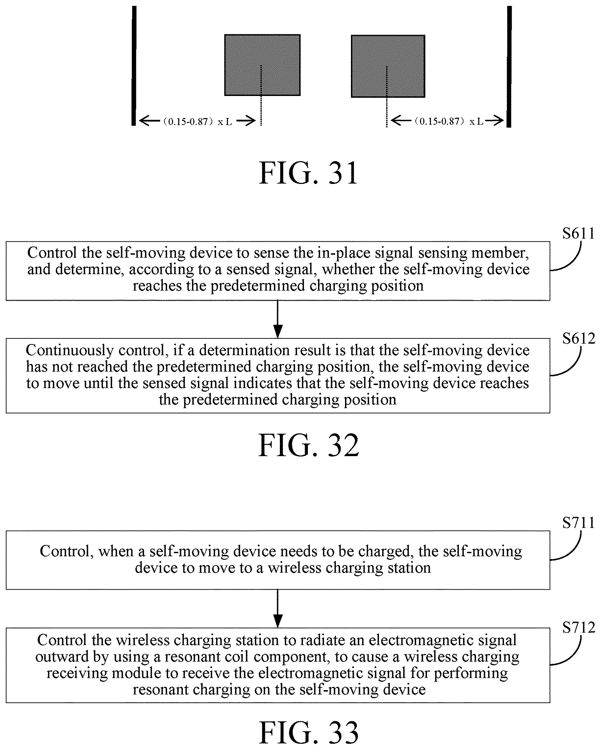

In some embodiments of the present invention, as shown in FIG. 31, when the wireless charging receiving module 21 of the self-moving device 20 is mounted at a front end of the self-moving device 20 in a normal traveling direction, a mounting order of the magnetic member and the resonant coil component from left to right is the magnetic member and the resonant coil component (it is assumed that the self-moving device 20 is docked in a clockwise loop, and if the self-moving device is docked counterclockwise, the mounting order is reversed). When the wireless charging receiving module 21 of the self-moving device 20 is mounted at a rear end of the self-moving device 20 in the normal traveling direction, a mounting order of the magnetic member and the resonant coil component from left to right is the resonant coil component and the magnetic member (it is assumed that the self-moving device 20 is docked in a clockwise loop, and if the self-moving device is docked counterclockwise, the mounting order is reversed). Assuming that a length of the self-moving device 20 is L, a distance D between the resonant coil component and the magnetic member satisfies a relation: 0.15 L≤D≤0.87 L. In this way, the docking precision of the self-moving device 20 can be ensured, and a signal can be guided.

In some embodiments of the present invention, the wireless charging station 10 may be the wireless charging station 10 in the foregoing embodiments. When the in-place signal sensing member 3 is the protrusion, a height of the in-place signal sensing member 3 is greater than 1/10 of a radius of the wheel 202 and less than 1/2 of the radius of the wheel. In this way, the wheels 202 can be prevented from falling into the bottom plate 1, thereby ensuring that the self-moving device 20 moves on the bottom plate 1 normally.

In some embodiments of the present invention, the wireless charging station 10 may be the wireless charging station 10 in the foregoing embodiments. When the in-place signal sensing member 3 is the groove, a height of the in-place signal sensing member 3 is greater than 1/10 of the radius of the wheel 202 and less than a thickness of the bottom plate 1. When the self-moving device 20 passes through the groove, the self-moving device 20 detects a movement current of the motor, and when a current change trend meets a concavity state, the self-moving device 20 has reached the predetermined charging position by default.

FIG. 30 is a flowchart of a method for charging a self-moving device according to an embodiment of the present invention. As shown in FIG. 30, the method for charging a self-moving device according to this embodiment of the present invention includes the following steps.

S601. Control, when a self-moving device needs to be charged, the self-moving device to move to a coverage corresponding to a predetermined charging position.

S602. Control the self-moving device to continue to move in a coverage region, and guide, by using an in-place signal sensing member, the self-moving device to reach the predetermined charging position.

S603. Control the wireless charging station to radiate an electromagnetic signal outward by using a resonant coil component, to cause a wireless charging receiving module to receive the electromagnetic signal for performing resonant charging on the self-moving device.

Specifically, when the self-moving device needs to be charged (for example, an amount of power of the self-moving device is less than a preset threshold), the self-moving device is controlled to move to a coverage of the wireless charging station, where the coverage is a physical range of the wireless charging station, that is, the coverage corresponding to the predetermined charging position in Embodiment 1, for example, an upper surface region of the wireless charging station, then the self-moving device is controlled to continue to move in a coverage region, and the self-moving device is guided by using an in-place signal sensing member to reach the predetermined charging position. The predetermined charging position may be a position in which the resonant coil component on the wireless charging station is aligned with the wireless charging receiving module on the self-moving device. After the self-moving device reaches the predetermined charging position, the wireless charging station is controlled to radiate an electromagnetic signal outward by using the resonant coil component, to cause the wireless charging receiving module to receive the electromagnetic signal for performing resonant charging on the self-moving device.

That is, when the self-moving device needs to be charged, two-layer progressive position adjustment may be performed on the self-moving device, that is, the first layer may be coarse adjustment. The self-moving device may be controlled to reach the coverage of the wireless charging station according to preset position information of the wireless charging station or a received charging control signal. The second layer may be fine adjustment, that is, the self-moving device is guided by using the in-place signal sensing member to reach a specific predetermined charging position, so that the wireless charging receiving module on the self-moving device can be aligned with the resonant coil component on the wireless charging station, to perform resonant charging on the self-moving device.

According to an embodiment of the present invention, as shown in FIG. 31, the guiding, by using an in-place signal sensing member, the self-moving device to reach the predetermined charging position includes:
5611. Control the self-moving device to sense the in-place signal sensing member, and determine, according to a sensed signal, whether the self-moving device reaches the predetermined charging position.
S612. Continuously control, if a determination result is that the self-moving device has not reached the predetermined charging position, the self-moving device to move until the sensed signal indicates that the self-moving device reaches the predetermined charging position.

That is, in a second-layer fine adjustment process, the self-moving device is controlled to sense the in-place signal sensing member, for example, a strength of a sensed signal is detected or a distance between the self-moving device and the sensing member is detected, and then whether the self-moving device reaches the predetermined charging position is determined according to the sensed signal. If it is determined that the self-moving device reaches the predetermined charging position, the self-moving device is controlled to brake, and if it is determined that the self-moving device has not reached the predetermined charging position, the self-moving device is continuously controlled to move until the signal sensed by the self-moving device indicates that the self-moving device reaches the predetermined charging position, that is, the self-moving device is controlled to move in the coverage of the wireless charging station until the self-moving device reaches the predetermined charging position. Therefore, it can be ensured that the wireless charging receiving module on the self-moving device is aligned with the resonant coil component on the wireless charging station, to improve the efficiency of charging the self-moving device.

According to an embodiment of the present invention, the method for charging a self-moving device further includes: in a process of charging the self-moving device, detecting a current temperature of the wireless charging station and/or the self-moving device, and controlling, if the current temperature exceeds a preset threshold, the wireless charging station to stop charging the self-moving device continuously.

Specifically, in a process of charging the self-moving device, current temperatures of the wireless charging station and the self-moving device are respectively detected, and then the current temperatures of the wireless charging station and the self-moving device are respectively determined, that is, whether the current temperature of the wireless charging station exceeds a preset temperature threshold of the wireless charging station is determined. If the current temperature of the wireless charging station exceeds the preset temperature threshold of the wireless charging station, the wireless charging station is controlled to stop charging the self-moving device continuously, and if the current temperature of the wireless charging station does not exceed the preset temperature threshold of the wireless charging station, the wireless charging station is controlled to continue to charge the self-moving device. In addition, whether the current temperature of the self-moving device exceeds a preset temperature threshold of the self-moving device is further determined. If the current temperature of the self-moving device exceeds the preset temperature threshold of the self-moving device, the wireless charging station is controlled to stop charging the self-moving device continuously, and if the current temperature of the self-moving device does not exceed the preset temperature threshold of the self-moving device, the wireless charging station is controlled to continue to charge the self-moving device.

That is, when the self-moving device is charged, the current temperature of either of the wireless charging station and the self-moving device exceeds a preset threshold, an operation of controlling the wireless charging station to stop charging the self-moving device continuously is triggered, and there is no need to perform an operation of stopping charging only when the current temperatures of the wireless charging station and the self-moving device exceed the preset threshold, thereby effectively avoiding safety hazard caused by continuous charging at a high temperature and a problem of shortening the service life of an electronic element.

It should be understood that a temperature detection device may be disposed in the wireless charging station and the self-moving device, so that when the wireless charging station charges the self-moving device, temperatures of the self-moving device and the wireless charging station are detected in real time. The preset threshold (including the preset temperature threshold of the wireless charging station and the preset temperature threshold of the self-moving device) may be 50°C.

Further, after it is detected that the current temperature of the wireless charging station and/or the self-moving device exceeds the preset threshold, the self-moving device is further controlled to remain stationary, and a current temperature of the wireless charging station and/or the self-moving device is continuously detected. When the current temperature of the wireless charging station and/or the self-moving device is less than the preset threshold, the self-moving device may be controlled to start walking again.

Therefore, according to the charging protection method provided in this embodiment of the present invention, by adding an over-temperature protection mechanism, the security of a charging process can be effectively improved, thereby improving user experience.

According to an embodiment of the present invention, the method for charging a self-moving device further includes: in a process of charging the self-moving device, detecting whether a living body enters a coverage of the wireless charging station. If it is detected that a living body enters the coverage, the wireless charging station is controlled to stop charging the self-moving device continuously.

The living body includes a living thing such as people or animals that can move. Specifically, at least one human body sensor may be disposed on the wireless charging station to detect whether a living body enters the coverage of the wireless charging station, and the human body sensor may be a pyroelectric infrared sensor and/or a microwave sensor, or the like.

That is, when the self-moving device is charged, to reduce or avoid adverse impact of electromagnetic radiation on people or animals, whether a living body enters a coverage of the wireless charging station should be detected in the charging process, that is, whether people or animals enter the coverage of the wireless charging station is detected. If it is detected that a living body enters the coverage, the wireless charging station is controlled to stop charging the self-moving device continuously, and if it is detected that no living body enters the coverage, the wireless charging station is controlled to continue to charge the self-moving device.

Further, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

That is, after the charging process is stopped because there is a living body in the coverage, to ensure a charging effect of the self-moving device, whether there is a living body in the coverage should still continue to be detected after the self-moving device is stopped from being continuously charged, and after the living body leaves the coverage, the wireless charging station is controlled to charge the self-moving device again. In other words, when the living body appears in the coverage, the charging process is stopped, and after the living body leaves the coverage, the charging process continues, so that it is ensured that a battery of the self-moving device can be fully charged in the charging process, and a case that the charging process is stopped due to presence of the living body in the coverage, resulting in an insufficient amount of power of the self-moving device when working again is avoided.

According to an embodiment of the present invention, before the controlling the wireless charging station to radiate an electromagnetic signal outward by using the resonant coil component, the method further includes: detecting whether the self-moving device enters a coverage corresponding to a predetermined charging position; and controlling, if it is detected that the self-moving device enters the coverage corresponding to the predetermined charging position, the wireless charging station to enter a charging mode.

That is, when whether the self-moving device enters a coverage corresponding to a predetermined charging position is detected, the wireless charging station is controlled to continuously establish a wireless connection with the self-moving device, and whether the wireless connection is successfully established between the wireless charging station and the self-moving device is determined. If the wireless connection is successfully established between the wireless charging station and the self-moving device, it is determined that the self-moving device enters the predetermined charging position, and if the wireless connection fails to be established between the wireless charging station and the self-moving device, it is determined that the self-moving device has not entered the predetermined charging position, and the wireless charging station is controlled to continue to establish the wireless connection with the self-moving device.

It should be noted that, in this embodiment of the present invention, the wireless connection may be established between the wireless charging station and the self-moving device by using a wireless communication component. A group of wireless communication components that are paired and bound are disposed on the wireless charging station and the self-moving device. The wireless communication component disposed on the self-moving device is powered by a battery on the self-moving device, so that the wireless communication component can receive a wireless connection signal once every first preset time. The wireless communication component disposed on the wireless charging station is powered by a power supply for supplying power to the wireless charging station, so that the wireless communication component can send a wireless connection signal once every second preset time. The wireless communication component may be a Bluetooth module. Due to an intrinsic property of the Bluetooth component, a connection can be established successfully only when two wireless communication components that are paired are in a preset distance range. Therefore, whether the self-moving device enters the coverage corresponding to the predetermined charging position may be determined by determining whether the wireless communication components establish a connection successfully. The first preset time may be 0 seconds to 10 seconds, that is, the self-moving device may continuously receive the wireless connection signal. The second preset time may be also 0 seconds to 10 seconds.

Specifically, in this embodiment of the present invention, the wireless communication component disposed on the self-moving device may receive a connection signal once every first preset time, and the wireless communication component disposed on the wireless charging station may send a connection signal once every second preset time. When the wireless communication component disposed on the self-moving device receives the from the wireless communication component disposed on the wireless charging station, the wireless connection is successfully established between the self-moving device and the wireless charging station. In this case, it is determined that the self-moving device enters the predetermined charging position.

Further, before the determining whether the self-moving device enters the predetermined charging position, the method further includes: controlling, if the wireless connection is successfully established between the wireless charging station and the self-moving device, the wireless charging station to detect a signal strength of the wireless connection, and determining, if the signal strength of the wireless connection reaches a preset signal strength, that the self-moving device enters the coverage corresponding to the charging position.

It should be noted that, the coverage corresponding to the predetermined charging position should be greater than the predetermined charging position. For example, the coverage corresponding to the predetermined charging position may be a coverage corresponding to the wireless charging station, and the predetermined charging position may be a coverage corresponding to the resonant coil component. Therefore, when it is detected that the wireless connection is successfully established between the wireless charging station and the self-moving device, it may be determined that the self-moving device enters the coverage corresponding to the predetermined charging position. In this embodiment of the present invention, the signal strength of the wireless connection may be set to be related to a distance between two ends of the wireless connection. Therefore, when the self-moving device is located at an edge of the coverage, the signal strength of the wireless connection is relatively small, while when the self-moving device enters the predetermined charging position, the signal strength of the wireless connection is relatively large. Therefore, after the wireless connection is successfully established between the wireless charging station and the self-moving device, the signal strength of the wireless connection may be further detected, to determine whether the self-moving device enters the coverage corresponding to the predetermined charging position.

Specifically, when whether the self-moving device enters the coverage corresponding to the predetermined charging position is detected, the wireless charging station is controlled to continuously establish the wireless connection with the self-moving device, and whether the wireless connection is successfully established between the wireless charging station and the self-moving device is determined. If the wireless connection is successfully established between the wireless charging station and the self-moving device, the wireless charging station is further controlled to detect a signal strength of the wireless connection, and whether the signal strength of the wireless connection reaches a preset signal strength is determined. If the signal strength of the wireless connection reaches the preset signal strength, it is determined that the self-moving device enters the predetermined charging position, and if the signal strength of the wireless connection has not reached the preset signal strength, it is determined that the self-moving device has not entered the predetermined charging position.

Further, as shown in FIG. 27, after the controlling the wireless charging station to enter a charging mode, the method further includes the following steps.

S511. Control the wireless charging station to receive a request signal sent by the self-moving device.

S512. Control the wireless charging station to charge the self-moving device.

That is, after a connection is successfully established between the wireless charging station and the self-moving device, the wireless charging station may be controlled to receive a request signal sent by the self-moving device. It should be understood that, in this case, the self-moving device should have sent the request signal, so that the wireless charging station receives the request signal. That is, after the connection is successfully established between the wireless charging station and the self-moving device, the self-moving device is first controlled to send the request signal to the wireless charging station, and then the wireless charging station is controlled to receive the request signal sent by the self-moving device; and after the wireless charging station receives the request signal, the wireless charging station is controlled to perform resonant charging on the self-moving device.

Alternatively, as shown in FIG. 28, after the controlling the wireless charging station to enter a charging mode, the method further includes the following steps.

S521. Control the wireless charging station to send a request signal to the self-moving device.

S522. Control, after an answer signal matching the request signal is received, the wireless charging station to charge the self-moving device.

That is, after a connection is successfully established between the wireless charging station and the self-moving device, the wireless charging station may be controlled to send a request signal to the self-moving device. It should be understood that, in this case, the self-moving device has not sent the request signal to the wireless charging station, but has passively received the request signal sent by the wireless charging station to the self-moving device. That is, after the connection is successfully established between the wireless charging station and the self-moving device, the wireless charging station is first controlled to send the request signal to the self-moving device, and then after receiving the request signal, the self-moving device sends, according to the request signal, an answer signal matching the request signal to the wireless charging station. The wireless charging station receives the answer signal sent by the self-moving device, and after the answer signal matching the request signal is received, the wireless charging station is controlled to perform resonant charging on the self-moving device.

Specifically, a difference between the two embodiments shown in FIG. 27 and FIG. 28 lies in that after the wireless connection is successfully established between the wireless charging station and the self-moving device, in the embodiment in FIG. 27, the self-moving device actively sends the request signal, but in the embodiment in FIG. 28, the self-moving device passively receives the request signal sent by the wireless charging station.

Further, after the determining that the self-moving device enters the coverage corresponding to the predetermined charging position, the method further includes: after the wireless connection is successfully established or the signal strength of the wireless connection reaches a predetermined strength, controlling the self-moving device to decelerate and move to the predetermined charging position.

In addition, before the determining that the self-moving device enters the predetermined charging position, the method further includes: after the wireless connection is successfully established or the signal strength of the wireless connection reaches a predetermined strength, controlling the wireless charging station to start the resonant coil component of the wireless charging station.

That is, after the wireless connection is successfully established between the wireless charging station and the self-moving device, it may be determined that the self-moving device enters the coverage corresponding to the predetermined charging position. In this case, the self-moving device is controlled to decelerate and move to the predetermined charging position slowly. The self-moving device can be controlled to perform accurate displacement by controlling deceleration of the self-moving device, to ensure that the self-moving device can move to the predetermined charging position. In addition, when the signal strength of the wireless connection reaches the predetermined strength, it may be determined that a distance between the self-moving device and the wireless charging station is sufficiently small. In this case, the wireless charging station may be controlled to start the resonant coil component of the wireless charging station, to perform resonant charging on the self-moving device.

Therefore, in this embodiment of the present invention, whether the self-moving device successfully enters the coverage corresponding to the predetermined charging position may be determined by determining whether the wireless communication components successfully establish a connection, and whether the self-moving device enters the predetermined charging position is further determined by detecting the signal strength of the wireless connection. When the self-moving device reaches the predetermined charging position, the wireless charging station is controlled to start a resonant coil of the wireless charging station to perform resonant charging on the self-moving device.

According to another embodiment of the present invention, as shown in FIG. 29, the detecting whether the self-moving device enters a coverage corresponding to a predetermined charging position includes:
S421. Control the wireless charging station to send a handshake signal outward by using the resonant coil component.
S422. Control the wireless charging station to detect a response signal matching the handshake signal.
S423. Determine, after the response signal is detected, that the self-moving device enters the coverage corresponding to the predetermined charging position.

Specifically, the wireless charging station may send a handshake signal outward by using the resonant coil component, and the self-moving device detects the handshake signal. When the resonant coil component on the wireless charging station is aligned with the wireless charging receiving module on the self-moving device, the wireless charging station may detect a response signal matching the handshake signal, and after the wireless charging station detects the response signal, a communication connection is established between the wireless charging station and the self-moving device. Respective wireless modules such as Wi-Fi modules, Bluetooth modules, or Zigbee modules may be further disposed on the wireless charging station and the self-moving device, so that the wireless charging station is communicatively connected to the self-moving device by the wireless modules.

That is, there are more than one manner of establishing a communication connection between the wireless charging station and the self-moving device, which may be any manner that can be conceived by a person skilled in the art.

S302. Control, if it is detected that the self-moving device enters the coverage corresponding to the predetermined charging position, the wireless charging station to enter a charging mode.

That is, when the self-moving device needs to be charged, the self-moving device is controlled to move to the wireless charging station, and then whether the self-moving device enters the coverage corresponding to the predetermined charging position is determined by using a wireless connection relationship between the self-moving device and the wireless charging station, and when it is detected that the self-moving device enters the coverage corresponding to the predetermined charging position, the wireless charging station is controlled to enter a charging mode. In this case, the self-moving device may be further controlled to move at a lower speed until the self-moving device moves to the predetermined charging position, to improve the resonant charging efficiency.

For example, the wireless charging station and the self-moving device are respectively provided with successfully matched Bluetooth docking devices, that is, the Bluetooth docking devices disposed on the wireless charging station and the self-moving device can perform a Bluetooth connection. In this embodiment of the present invention, the Bluetooth docking devices may be successfully connected within a range of five meters. When the self-moving device needs to be charged, the wireless charging station obtains current position information of the self-moving device and guides the self-moving device to return to a coverage region of the wireless charging station. During returning of the self-moving device, a wireless connection signal may be sent outward by the wireless charging station/the self-moving device. After the self-moving device/the wireless charging station receives the wireless connection signal, the wireless connection is successfully established between the wireless charging station and the self-moving device. In this case, it may be determined that the self-moving device enters the coverage corresponding to the predetermined charging position.

To further determine that the self-moving device has entered the coverage corresponding to the predetermined charging position, the signal strength of the wireless connection between the wireless charging station and the self-moving device may be further determined. When the signal strength of the wireless connection reaches the preset signal strength, it is determined that the self-moving device enters the coverage corresponding to the predetermined charging position.

After it is determined, by using the wireless connection or the signal strength of the wireless connection, that the self-moving device enters the coverage corresponding to the predetermined charging position, the self-moving device may be further controlled to move at a lower speed to improve the accuracy of the movement of the self-moving device and ensure that the self-moving device can accurately move to the predetermined charging position, and the wireless charging station is controlled to start the resonant coil component of the wireless charging station, to prepare to enter a charging mode.

Subsequently, to verify that the self-moving device has entered the coverage corresponding to the predetermined charging position, the resonant coil component and the self-moving device are further controlled to communicate with each other by using the low-frequency handshake signal and the response signal matching the low-frequency handshake signal, so that the accuracy of determining that the self-moving device enters the coverage corresponding to the predetermined charging position is improved by adding a detection manner.

It should be understood that one or more of the foregoing three manners in which it is detected that the wireless connection is successfully established, the signal strength of the wireless connection is detected, and the low-frequency handshake signal and the response signal matching the low-frequency handshake signal are detected may be adopted during specific implementation. For example, when a distance for establishing the wireless connection is set to be relatively small, whether the self-moving device enters the coverage corresponding to the predetermined charging position may be determined by detecting whether the wireless connection is successfully established. When a distance for establishing the wireless connection is set to be relatively large, and after it is detected that the wireless connection is successfully established, the signal strength of the wireless connection may be further detected, to determine whether the self-moving device enters the predetermined charging position. To improve the accuracy of the detection, a manner of detecting a low-frequency handshake signal may be further added after it is detected that the wireless connection is successfully established and/or the signal strength of the wireless connection is detected, to further determine that the self-moving device enters the coverage corresponding to the predetermined charging position. That is, after it is detected that the wireless connection is successfully established and a response signal matching the low-frequency handshake signal is detected, it is determined that the self-moving device enters the coverage corresponding to the predetermined charging position, or after it is detected that the signal strength of the wireless connection reaches the preset signal strength and a response signal matching the low-frequency handshake signal is detected, it is determined that the self-moving device enters the coverage corresponding to the predetermined charging position.

Further, during charging, whether charging of the self-moving device is completed is detected, and if the charging has been completed, the wireless charging station is controlled to enter, from the charging mode, a low-power consumption mode.

The low-power consumption mode is a mode in which the wireless charging station only ensures a wireless communication function.

That is, after the self-moving device moves to a predetermined charging position (the resonant coil component on the wireless charging station is aligned with the wireless charging receiving module on the self-moving device), the communication connection is first established between the self-moving device and the wireless charging station, and then the self-moving device communicates with the wireless charging station to control the wireless charging station to enter a charging mode, to enable the wireless charging station to charge the self-moving device. During charging, whether charging of the self-moving device is completed is detected in real time; and if the charging is not completed, the charging continues, and if the charging is completed, the wireless charging station is controlled to enter, from the charging mode, a low-power consumption mode, to enable the wireless communication function to wait for the self-moving device to establish a communication connection.

Based on the foregoing, according to the method for charging a self-moving device provided in this embodiment of the present invention, when a self-moving device needs to be charged, the self-moving device is controlled to move to a coverage of a wireless charging station, the self-moving device is controlled to continue to move in a coverage region, the self-moving device is guided by using an in-place signal sensing member to reach a predetermined charging position, and the wireless charging station is controlled to radiate an electromagnetic signal outward by using a resonant coil component, to cause a wireless charging receiving module to receive the electromagnetic signal for performing resonant charging on the self-moving device. Therefore, according to the charging method provided in this embodiment of the present invention, the self-moving device is guided by using an in-place signal to reach the predetermined charging position, which effectively improves the efficiency of performing resonant charging on the self-moving device by the wireless charging station.

### Embodiment 3

The following describes a method for charging a self-moving device provided in this embodiment of the present invention with reference to the wireless charging station and the wireless charging system in FIG. 14 to FIG. 22.

The method for charging a self-moving device is applicable to the wireless charging system, and the wireless charging system includes the wireless charging station and the self-moving device. A resonant coil component is disposed on a bottom plate of the wireless charging station, and a wireless charging receiving module is disposed at the bottom of the self-moving device.

FIG. 32 is a flowchart of still another method for charging a self-moving device according to an embodiment of the present invention. As shown in FIG. 32, the method for charging a self-moving device according to this embodiment of the present invention includes the following steps.

S711. Control, when a self-moving device needs to be charged, the self-moving device to move to a wireless charging station.

S712. Control the wireless charging station to radiate an electromagnetic signal outward by using a resonant coil component, to cause a wireless charging receiving module to receive the electromagnetic signal for performing resonant charging on the self-moving device. The resonance frequency is 6.78 MHz or 80 KHz to 400 KHz.

It should be further noted that when the resonance frequency used by the wireless charging station is 80 KHz to 400 KHz, before charging, the wireless charging station is controlled to perform metal object detection on a coverage of the wireless charging station; and when it is detected that there is a metal object in the coverage, the wireless charging station is controlled to send warning information.

Further, in a process of charging the self-moving device, a current temperature of the wireless charging station and/or the self-moving device is detected, and if the current temperature exceeds a preset threshold, the wireless charging station is controlled to stop charging the self-moving device continuously.

Further, in a process of charging the self-moving device, whether a living body enters a coverage of a wireless charging station is detected, and if it is detected that a living body enters the coverage, the wireless charging station is controlled to stop charging the self-moving device continuously.

Further, after the controlling the wireless charging station to stop charging the self-moving device continuously, the method further includes: when charging is not completed, continuously detecting a living body that enters the coverage, and controlling, if it is detected that the living body leaves the coverage, the wireless charging station to charge the self-moving device again.

Further, before the controlling the wireless charging station to radiate an electromagnetic signal outward by using the resonant coil component, the method further includes: detecting whether the self-moving device enters a coverage corresponding to a predetermined charging position; and controlling, if it is detected that the self-moving device enters the coverage corresponding to the predetermined charging position, the wireless charging station to enter a charging mode.

Further, during charging, whether charging of the self-moving device is completed is detected, and if the charging has been completed, the wireless charging station is controlled to enter, from the charging mode, a low-power consumption mode.

It should be noted that, the foregoing explanations and descriptions of the embodiment of the method for charging a self-moving device or the another method for charging a self-moving device are also applicable to the still another method for charging a self-moving device in this embodiment, and details are not described herein again.

### Embodiment 4

A charging protection method for a self-moving device in this embodiment is provided based on the wireless charging station and the wireless charging system in Embodiment 1 to Embodiment 3.

The charging protection method for a self-moving device according to this embodiment of the present invention includes the following steps.

S721. In a process of charging a self-moving device, detect respective current temperatures of the self-moving device and a wireless charging station.

S722. If one of the current temperatures exceeds a preset temperature threshold, perform control to perform over-temperature protection for charging.

Further, the performing control to perform over-temperature protection for charging includes: controlling both a wireless charging transmitting module in the wireless charging station and a wireless charging receiving module in the self-moving device to be turned off, where the wireless charging transmitting module includes a resonant coil component disposed on a bottom plate of the wireless charging station.

Further, the performing control to perform over-temperature protection for charging includes: controlling the wireless charging transmitting module in the wireless charging station to be turned off; and sending indication information to the self-moving device, and turning off the wireless charging receiving module in the self-moving device according to the indication signal.

Further, after charging is completed, and if it is detected that the current temperature of the self-moving device exceeds the temperature threshold, the self-moving device is controlled to dock at the wireless charging station; and the current temperature of the self-moving device is continuously detected, and if the detected current temperature does not exceed the temperature threshold, the self-moving device is controlled to start moving away from the wireless charging station.

It should be noted that, the foregoing explanations and descriptions of the embodiment of the method for charging a self-moving device, the another method for charging a self-moving device, and the still another method for charging a self-moving device are also applicable to the charging protection method for a self-moving device in this embodiment, and details are not described herein again.

### Embodiment 5

Another charging protection method for a self-moving device in this embodiment is provided based on the wireless charging station and the wireless charging system in Embodiment 1 to Embodiment 4.

The another charging protection method for a self-moving device according to this embodiment of the present invention includes the following steps.

S801. Detect, in a process of charging a self-moving device, whether a living body enters a coverage of a wireless charging station. The coverage of the wireless charging station is a coverage corresponding to a predetermined charging position.

S802. Control, if it is detected that a living body enters the coverage, the wireless charging station to stop charging the self-moving device continuously.

Further, when charging is not completed, a living body that enters the coverage is continuously detected, and if it is detected that the living body leaves the coverage, the wireless charging station is controlled to charge the self-moving device again.

Further, a living body detection device is mounted on the wireless charging station or the self-moving device, and the method further includes: controlling the living body detection device to perform living body detection on the coverage in a charging mode.

Further, the detecting whether a living body enters a coverage of a wireless charging station includes: obtaining image information acquired by the living body detection device, performing feature extraction on the image information, and recognizing whether there is a living body in the coverage according to an extracted feature.

It should be noted that, the foregoing explanations and descriptions of the embodiment of the method for charging a self-moving device, the another method for charging a self-moving device, the still another method for charging a self-moving device, and the charging protection method for a self-moving device are also applicable to the another charging protection method for a self-moving device in this embodiment, and details are not described herein again.

### Embodiment 6

A charging energy-saving method in this embodiment is provided based on the wireless charging station and the wireless charging system in Embodiment 1 to Embodiment 5.

The charging energy-saving method according to this embodiment of the present invention includes the following steps.

S901. Detect whether the self-moving device enters a coverage corresponding to a predetermined charging position.

S902. Control, if it is detected that the self-moving device enters the coverage corresponding to the predetermined charging position, the wireless charging station to enter a charging mode and charge the self-moving device.

S903. During charging, detect whether charging of the self-moving device is completed, and control, if the charging has been completed, the wireless charging station to enter, from the charging mode, a low-power consumption mode.

Further, the detecting whether the self-moving device enters a predetermined charging position includes: controlling the wireless charging station and the self-moving device to establish a wireless connection; and determining, if the wireless connection is successfully established between the wireless charging station and the self-moving device, that the self-moving device enters the predetermined charging position.

Further, before the determining whether the self-moving device enters a predetermined charging position, the method further includes: controlling the wireless charging station and the self-moving device to establish a wireless connection; and controlling, if the wireless connection is successfully established between the wireless charging station and the self-moving device, the wireless charging station to detect a signal strength of the wireless connection, and determining, if the signal strength of the wireless connection reaches a preset signal strength, that the self-moving device enters the coverage corresponding to the predetermined charging position.

Further, the detecting whether the self-moving device enters a predetermined charging position includes: controlling the wireless charging station to send a handshake signal outward by using the resonant coil component; controlling the wireless charging station to detect a response signal matching the handshake signal; and determining, after the response signal is detected, that the self-moving device enters the coverage corresponding to the predetermined charging position.

Further, after the controlling the wireless charging station to enter a charging mode, the method further includes: controlling the wireless charging station to receive a request signal sent by the self-moving device, and controlling the wireless charging station to charge the self-moving device; or controlling the wireless charging station to send a request signal to the self-moving device, and controlling, after an answer signal matching the request signal is received, the wireless charging station to charge the self-moving device.

Further, after the determining that the self-moving device enters the coverage corresponding to the predetermined charging position, the method further includes: after the wireless connection is successfully established or the signal strength of the wireless connection reaches a predetermined strength, controlling the self-moving device to decelerate and move to the predetermined charging position.

Further, before the determining that the self-moving device enters the predetermined charging position, the method further includes: after the wireless connection is successfully established or the signal strength of the wireless connection reaches a predetermined strength, controlling the wireless charging station to start a resonant coil component of the wireless charging station.

It should be noted that, the foregoing explanations and descriptions of the embodiment of the method for charging a self-moving device, the another method for charging a self-moving device, the still another method for charging a self-moving device, and the charging protection method for a self-moving device are also applicable to the another charging protection method for a self-moving device in this embodiment, and details are not described herein again.

In the description of this specification, the description of reference terms such as "one embodiment", "some embodiments", "example", "specific example" or "some examples" means that specific features, structures, materials or characteristics described in combination with the embodiment or example are included in at least one embodiment or example of the present invention. In this specification, exemplary descriptions of the foregoing terms do not necessarily refer to a same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

In addition, terms "first" and "second" are used merely for the purpose of description, and shall not be construed as indicating or implying relative importance or implying a quantity of indicated technical features. Therefore, features defining "first" and "second" can explicitly or implicitly include at least one of the features. In the description of the present invention, unless otherwise explicitly defined, "a plurality of" means at least two, for example, two, three and the like.

Any process or method description described in the flowchart or in other manners herein can be understood as representing a module, fragment or part of code including one or more executable instructions for implementing customized logic functions or steps of the process, and the scope of exemplary embodiments of the present invention includes additional implementations in which functions may be performed out of the order shown or discussed, for example, in a substantially simultaneous manner or in reverse order according to the functions involved, which should be understood by those skilled in the art to which embodiments of the present invention belong.

The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present invention can be implemented by using hardware, software, firmware, or a combination thereof. In the foregoing implementations, a plurality of steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit of a logic gate circuit for realizing a logic function for a data signal, an application-specific integrated circuit having a suitable combined logic gate circuit, a programmable gate array (PGA), and a field programmable gate array (FPGA).

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, each functional unit in each embodiment of the present invention may be integrated into one processing module, or each unit may exist alone physically, or two or more units may be integrated into one module. The integrated module may be implemented in the form of hardware, or may be implemented in a form of a software functional module. If implemented in the form of software functional modules and sold or used as an independent product, the integrated module may also be stored in a computer-readable storage medium.

The storage medium mentioned above may be a read-only memory, a magnetic disk, an optical disc, or the like. Although the embodiments of the present invention have been shown and described above, it can be understood that, the foregoing embodiments are exemplary and should not be understood as limitation to the present invention. A person of ordinary skill in the art can make changes, modifications, replacements, or variations to the foregoing embodiments within the scope of the present invention.

## Claims

1. A wireless charging station, configured to charge a self-moving device, wherein the wireless charging station comprises a bottom plate and a wireless transmitting module fixed to the bottom plate, the wireless transmitting module is provided with at least one resonant coil transmitting component, the resonant coil transmitting component transmits an electromagnetic signal, and the self-moving device receives the electromagnetic signal after entering the bottom plate to perform a charging operation.

2. The wireless charging station according to claim 1, wherein the bottom plate comprises a plurality of hollow holes, to allow vegetation to pass through the hollow holes for growing.

3. The wireless charging station according to claim 2, wherein the hollow holes are circular or rectangular.

4. The wireless charging station according to claim 2, wherein the hollow holes are evenly arranged on the bottom plate.

5. The wireless charging station according to claim 1, wherein a docking guidance structure is disposed on the bottom plate, and the self-moving device is guided by using the docking guidance structure to dock at a predetermined charging position.

6. The wireless charging station according to claim 5, wherein the docking guidance structure comprises a guide rail structure.

7. The wireless charging station according to claim 5, wherein the docking guidance structure comprises a sensing structure, wherein the sensing structure and the self-moving device sense each other.

8. The wireless charging station according to claim 7, wherein the sensing structure comprises a magnetic component or a guide wire structure.

9. The wireless charging station according to claim 1, wherein an inclined structure rising from a bottom surface is disposed on a front side of the bottom plate, and the self-moving device returns to the bottom plate along the inclined structure.

10. The wireless charging station according to claim 1, wherein a length of the bottom plate is 1.4 times to 2 times a length of the self-moving device, and a width of the bottom plate exceeds a width of the self-moving device by 10% to 30%.

11. The wireless charging station according to claim 1, wherein a height of the bottom plate is between 15 mm and 25 mm.

12. The wireless charging station according to claim 1, wherein an upper surface of the wireless transmitting module does not extend beyond an upper surface of the bottom plate.

13. The wireless charging station according to claim 1, wherein an operation module is disposed on the bottom plate, and work of the wireless transmitting module is started by triggering the operation module.

14. The wireless charging station according to claim 1, wherein an indicator light is disposed on the bottom plate, and a working state of the bottom plate is indicated by using the indicator light.

15. The wireless charging station according to claim 1, wherein a sunshine shed structure is disposed on one side of the bottom plate, and the sunshine shed structure comprises a support and a shed body connected to the support.

16. The wireless charging station according to claim 15, wherein the sunshine shed structure is disposed on a rear side of the bottom plate.

17. The wireless charging station according to claim 15, wherein a projection of the shed body structure on a horizontal plane covers a projection of the self-moving device on the horizontal plane when docking at the wireless charging station.

18. The wireless charging station according to claim 16, wherein the wireless transmitting module is disposed on the rear side of the bottom plate, and when a wireless receiving module of the self-moving device is also disposed on a rear side of the self-moving device, a tail portion of the self-moving device first enters the bottom plate.

19. The wireless charging station according to claim 1, wherein the wireless transmitting module is disposed in the middle or the rear of the bottom plate in a length direction.

20. The wireless charging station according to claim 1, wherein distances from the wireless transmitting module to two sides of the bottom plate in a width direction are the same.

21. The wireless charging station according to claim 1, wherein at least one holding portion is disposed on the bottom plate or the wireless transmitting module.

22. The wireless charging station according to claim 21, wherein the holding portions are disposed on two sides of the bottom plate or the wireless transmitting module.

23. The wireless charging station according to claim 1, wherein the self-moving device comprises a wireless charging receiving module, and the wireless charging receiving module comprises only one resonant coil receiving component.

24. The wireless charging station according to claim 1, comprising a temperature detection device, wherein a current temperature of the wireless charging station and/or the self-moving device is detected by using the temperature detection device, and if at least one of the current temperatures exceeds a temperature threshold, the wireless charging station and/or the self-moving device is controlled to perform over-temperature protection.

25. The wireless charging station according to claim 24, wherein during charging of the self-moving device, if the at least one of the current temperatures exceeds the temperature threshold, the performing control to perform over-temperature protection comprises: controlling both a wireless charging transmitting module in the wireless charging station and a wireless charging receiving module in the self-moving device to be turned off.

26. The wireless charging station according to claim 24, wherein when charging of the self-moving device is completed, and if the at least one of the current temperatures exceeds the temperature threshold, the performing control to perform over-temperature protection comprises: controlling the self-moving device to dock at the wireless charging station.

27. The wireless charging station according to claim 24, wherein after the performing control to perform over-temperature protection, and when the temperature detection device detects that the current temperature of the wireless charging station and/or the self-moving device is lower than the temperature threshold, the self-moving device is controlled to depart from the wireless charging station.

28. The wireless charging station according to claim 24, wherein the temperature threshold is between 45°C and 50°C.

29. The wireless charging station according to claim 1, wherein if the self-moving device is incapable of successfully docking with the wireless charging station when returning to the wireless charging station, the self-moving device controls the wireless transmitting module to stand by and/or controls the self-moving device to stop.

30. The wireless charging station according to claim 29, wherein the controlling the wireless transmitting module to stand by comprises controlling the wireless transmitting module to stop transmitting an electromagnetic wave outward.

31. The wireless charging station according to claim 29, wherein the self-moving device and the wireless charging station each comprise a wireless communication module, and after the self-moving device establishes communication with the wireless charging station, the wireless charging station receives a standby signal transmitted by the self-moving device to control the wireless transmitting module to stand by.

32. The wireless charging station according to claim 31, wherein the wireless communication module comprises a radio frequency module or a coil component.

33. A self-moving device, charged by a wireless charging station, the self-moving device comprising:
a housing; a movable device, mounted on the housing and configured to drive the self-moving device to move; a working device, mounted on the housing and configured to perform a working task; and a power supply device, mounted in the housing and configured to supply power to the movable device and the working device, wherein the wireless charging station comprises a bottom plate and a wireless transmitting module fixed to the bottom plate, the wireless transmitting module is provided with at least one resonant coil transmitting component, the self-moving device comprises a wireless receiving module, the wireless receiving module comprises at least one resonant coil receiving component, and after entering the bottom plate, the self-moving device receives, by using the resonant coil receiving component, an electromagnetic signal transmitted by the resonant coil transmitting component to supply power to the power supply device.

34. The self-moving device according to claim 33, wherein the resonant coil receiving component is disposed at the bottom of the self-moving device.

35. The self-moving device according to claim 33, wherein the resonant coil receiving component is disposed in a rotation center of the self-moving device.

36. The self-moving device according to claim 33, wherein a front portion or a rear portion of the self-moving device first enters the bottom plate.

37. The self-moving device according to claim 33, comprising a docking guidance detection structure, wherein the docking guidance detection structure detects a docking guidance structure disposed on the wireless charging station to guide the self-moving device to dock at a predetermined charging position.

38. The self-moving device according to claim 33, comprising a temperature detection device, wherein a current temperature of the wireless charging station and/or the self-moving device is detected by using the temperature detection device, and if at least one of the current temperatures exceeds a temperature threshold, the self-moving device and/or the wireless charging station is controlled to perform over-temperature protection.

39. The self-moving device according to claim 37, wherein during charging of the self-moving device, if the at least one of the current temperatures exceeds the temperature threshold, the performing control to perform over-temperature protection comprises: controlling both a wireless charging transmitting module in the wireless charging station and a wireless charging receiving module in the self-moving device to be turned off.

40. The self-moving device according to claim 37, wherein when charging of the self-moving device is completed, and if the at least one of the current temperatures exceeds the temperature threshold, the performing control to perform over-temperature protection comprises: controlling the self-moving device to dock at the wireless charging station.

41. The self-moving device according to claim 38, wherein after the performing control to perform over-temperature protection, and when the temperature detection device detects that the current temperature of the wireless charging station and/or the self-moving device is lower than the temperature threshold, the self-moving device is controlled to depart from the wireless charging station.

42. The self-moving device according to claim 38, wherein the temperature threshold is between 45°C and 50°C.

43. The self-moving device according to claim 33, wherein if the self-moving device is incapable of successfully docking with the wireless charging station when returning to the wireless charging station, the self-moving device controls the wireless transmitting module to stand by and then controls the self-moving device to stop.

44. The self-moving device according to claim 43, wherein the controlling the wireless transmitting module to stand by comprises controlling the wireless transmitting module to stop transmitting an electromagnetic wave outward.

45. The self-moving device according to claim 43, wherein the self-moving device and the wireless charging station each comprise a wireless communication module, and after the self-moving device establishes communication with the wireless charging station, the self-moving device transmits a standby signal to the wireless charging station to control the wireless transmitting module to stand by.

46. The self-moving device according to claim 45, wherein the wireless communication module comprises a radio frequency module or a coil component.

47. A wireless charging system, comprising the wireless charging station according to any one of claims 1 to 32 and the self-moving device according to any one of claims 33 to 46.
